# EUROPÄISCHE PATENTSCHRIFT

(11) **EP 3 294 521 B1**
(45) Veröffentlichungstag und Bekanntmachung des Hinweises auf die Patenterteilung: **14.08.2019**
(21) Anmeldenummer: 15778330.9
(22) Anmeldetag: 09.10.2015
(51) Int. Cl.: B29C 49/36, B29C 49/06, B29C 33/26, B29C 33/30, B29C 49/48, B29C 33/28, B29L 31/00, B29K 105/00

(54) **BLASFORMMASCHINE MIT AUTOMATISCH BETÄTIGBARER BODENANKOPPLUNG UND VERFAHREN ZUM BETREIBEN DEREN VORRICHTUNG**
BLOW MOULDING MACHINE WITH AUTOMATICALLY ACTUATABLE BASE COUPLING AND METHOD FOR OPERATING SAID DEVICE
DISPOSITIF DE MOULAGE PAR SOUFFLAGE PRÉSENTANT UN ACCOUPLEMENT DE FOND À ACTIONNEMENT AUTOMATIQUE ET PROCÉDÉ POUR LE FONCTIONNEMENT DU DISPOSITIF ASSOCIÉ

(43) Veröffentlichungstag der Anmeldung: 21.03.2018
(60) Teilanmeldung: 18215190.2
(73) Patentinhaber: Krones AG, 93073 Neutraubling (DE)
(72) Erfinder: GELTINGER, Florian, 93073 Neutraubling (DE)
(74) Vertreter: Bittner, Bernhard
(86) Internationale Anmeldenummer: PCT/EP2015/073492
(87) Internationale Veröffentlichungsnummer: WO 2017/059930

(56) Entgegenhaltungen:
- EP-A2- 2 444 233
- DE-A1-102009 050 637
- DE-A1-102011 050 724

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt.

Dabei werden üblicherweise erwärmte Kunststoffvorformlinge einer Blasformeinrichtung, wie insbesondere einer Streckblasmaschine, zugeführt und von dieser zu Kunststoffbehältnissen expandiert.

Diese Blasformmaschinen weisen dabei üblicherweise eine Vielzahl von Blasstationen auf, die wiederum mit Blasformen ausgestattet sind, in deren Innerem die Kunststoffvorformlinge durch Beaufschlagung mit Druckluft zu den Kunststoffbehältnissen und insbesondere zu Kunststoffflaschen umgeformt werden. Im Betrieb derartiger Vorrichtungen ist es oftmals jedoch erforderlich, die Blasformeinrichtungen auszuwechseln. Dies kann beispielsweise nötig sein, wenn von einer bestimmten Behältnisgattung auf eine andere Behältnisgattung bzw. Behältnisform umgestellt werden soll.

Diese Umstellung ist dabei im Stand der Technik ein relativ aufwendiger Prozess, da an jeder der einzelnen Umformungsstationen jeweils die Blasformen eingewechselt werden müssen. Dies erfolgt im Stand der Technik üblicherweise unter Verwendung von Werkzeugen, wie beispielsweise Schraubenziehern und dergleichen.

Die DE 10 2010 048 720 A1 beschreibt eine schnell montierbare Bodenform mit einer zusätzlichen Haltekraftunterstützung. Dabei kann hier mittels einer Drehbewegung eines Arretierelements ein Lösen des Bodenteils der Blasform von einem Träger erreicht werden.

Die EP 1 299 223 B1 beschreibt eine Vorrichtung zur Blasformung von Behältern. Bei dieser Vorrichtung findet ein Handhebel zum Lösen des Bodenteils Anwendung. Durch diesen Handhebel wird jedoch eine automatisierte Lösung des Bodenteils verhindert.

Aus der DE 10 2009 050 637 A1 ist eine Blasformanordnung zum Umformen von Kunststoffvorformlingen zu Kunststoffbehältnissen mit einer Blasformeinheit bekannt, wobei die Blasformeinheit wenigstens zweiteilig ausgebildet ist. Ein Blasformhalter weist zwei Formhalterelemente zur Aufnahme von Teilen der Blasformeinheit auf. Weiterhin weist die Blasformanordnung einen Verriegelungsmechanismus auf, mittels welchem ein Teil der Blasformeinheit gegenüber einem Formhalterelement arretierbar ist. Der Verriegelungsmechanismus weist ein Betätigungselement auf, um eine Arretierung zwischen dem Formhalterelement und der Blasformeinheit zu lösen. Die Bewegung dieses Betätigungselements ist mit der Bewegung eines schwenkbaren und/oder verschiebbaren Eingriffselements des Verriegelungsmechanismus gekoppelt.

Bei manchen Blasformeinrichtungen ist es im Rahmen des Herstellungsprozesses nötig oder vorteilhaft, wenn deren Wandungen temperiert, beispielsweise gekühlt werden. Zu diesem Zweck weisen die entsprechenden Blasformeinrichtungen bzw. deren Seitenteile oder deren Bodenteile Temperierkanäle auf, innerhalb derer ein Temperiermedium fließen kann. Diese Temperierkanäle werden dabei an eine Kühlmittelversorgung, beispielsweise an eine Wasserversorgung, angeschlossen und so kann im Arbeitsbetrieb die Temperierung erreicht bzw. aufrechterhalten werden.

Der vorliegenden Erfindung liegt die Aufgabe zugrunde, eine Vorrichtung und ein Verfahren zur Verfügung zu stellen, welche einen vergleichsweise schnellen Wechselvorgang der Blasformeinrichtung ermöglichen und welche bevorzugt auch ein zumindest teilautomatisches Wechseln von Blasformteilen ermöglichen sollen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungsstation auf, welche wiederum eine Blasform aufweist, innerhalb derer die Kunststoffvorformlinge durch Beaufschlagung mit einem gasförmigen Medium expandierbar sind. Dabei weist die Blasform ein Bodenteil auf, welches lösbar (und zumindest mittelbar) an einem Träger angeordnet ist. Weiterhin weist die Vorrichtung einen ersten Befestigungsmechanismus auf, um die Blasform und insbesondere das Bodenteil an diesem Träger zu befestigen. Weiterhin weist die Blasform wenigstens ein Seitenteil auf, welches lösbar an einem Träger angeordnet ist und einen zweiten Befestigungsmechanismus, um das Seitenteil an dem Träger zu befestigen.

Erfindungsgemäß ist der erste Befestigungsmechanismus mittels eines fließfähigen Mediums betätigbar, um das Bodenteil gegenüber dem Träger zu entriegeln (bzw. um es von dem Träger zu lösen oder von diesem lösbar zu machen) und der zweite Befestigungsmechanismus ist mittels eines fließfähigen Mediums betätigbar ist, um das Seitenteil von dem Träger zu entriegeln (bzw. um es von dem Träger zu lösen oder von diesem lösbar zu machen) wobei weiterhin eine - bevorzugt zentrale - Medienanschlusseinrichtung vorgesehen ist, um das fließfähige Medium den Befestigungsmechanismen und insbesondere gleichzeitig mehreren Befestigungsmechanismen zuzuführen. Wie unten noch genauer erläutert wird, sind bevorzugt mehrere Umformungsstationen an einem gemeinsamen Träger angeordnet und diese Umformungsstationen weisen jeweils eine Medienanschlusseinrichtung auf.

Insbesondere handelt es sich bei der Medienanschlusseinrichtung um eine gemeinsame, insbesondere zentrale Medienanschlusseinrichtung, über welche beiden Befestigungsmechanismen das fließfähige Medium zugeführt werden kann. Bevorzugt handelt es sich bei dem fließfähigen Medium um ein gasförmiges Medium und insbesondere um Druckluft. Bevorzugt weist die Vorrichtung auch ein zweites Seitenteil auf, welches ebenfalls in entsprechender Weise an einem Träger angeordnet ist.

Vorteilhaft ist eine Vielzahl von Umformungsstationen an dem Träger angeordnet, so dass zu Demontagezwecken (z.B. Blasformwechsel) jede einzelne dieser Umformungsstationen jeweils an die Betätigungseinrichtung herangeführt werden kann, so dass bevorzugt die Befestigungsmechanismen sämtlicher Umformungsstationen von dieser Betätigungseinrichtung angesteuert werden können. Auf diese Weise kann die Automatisierung des Blasformwechselvorgangs erheblich erleichtert werden. Dabei ist es möglich, dass zum Einlegen einer Blasform in den Formträger bzw. die Bodenform eine exakte Positionierung des Trägers (im Folgenden auch als Blasrad bezeichnet) bzw. der Umformungstation relativ zu dem hier örtlich fixierten Formwechselsystem, d.h. der Betätigungseinrichtung und/oder einem weiteren Roboter, der zum Entnehmen der Blasformen dient, vorgenommen wird.

Unter einer Betätigungseinrichtung wird eine Einrichtung verstanden, welche insbesondere zum Betätigen des Befestigungsmechanismus geeignet und bestimmt ist und welche insbesondere dazu geeignet und bestimmt ist, den Befestigungsmechanismus zumindest von einem ersten Zustand, in dem die Seitenteile oder das Bodenteil an ihren Trägern gehalten werden, umzuschalten in einen Lösezustand, in dem die Seitenteile oder das Bodenteil von den jeweiligen Trägern gelöst werden können. Dabei kann diese Betätigungseinrichtung beispielsweise Druckluft zur Verfügung stellen, welche wiederum zum Betätigen der Befestigungsmechanismen dient.

Bei einer weiteren vorteilhaften Ausführungsform ist wenigstens ein Befestigungsmechanismus zwischen wenigstens zwei Zuständen schaltbar, insbesondere einem Zustand, in dem das Bodenteil bzw. das Seitenteil mit dem ihm jeweils zugeordneten Träger verriegelt ist und/ oder an diesem Träger gehalten ist und einem zweiten Zustand, in dem das Bodenteil bzw. das Seitenteil von dem ihm jeweils zugeordneten Träger entriegelt ist und/oder von diesem entfernt werden kann.

Bevorzugt setzt sich die oben genannte Blasform aus zwei Seitenteilen zusammen, bevorzugt einer linken Formschale und einer rechten Formschale sowie einer Bodenform. Diese drei Elemente umschließen einen Hohlraum, innerhalb dessen im Betrieb die Kunststoffvorformlinge zu den Kunststoffbehältnissen umgeformt werden. Bevorzugt ist je Umformungsstation ein gemeinsamer Medienanschluss vorgesehen, mittels dessen das fließfähige Medium den drei Befestigungsmechanismen zugeführt werden kann.

Bevorzugt ist wenigstens ein Befestigungsmechanismus derart gestaltet, dass er in einem bezüglich des fließfähigen Mediums drucklosen Zustand in einem verriegelten Zustand ist. Bevorzugt sind mehrere und besonders bevorzugt alle der oben genannten Befestigungsmechanismen derart gestaltet, dass sie in einem bezüglich des fließfähigen Mediums drucklosen Zustand in einem verriegelten Zustand sind. Auf diese Weise kann erreicht werden, dass wenigstens Teile der Blasform und bevorzugt die gesamte Blasform in einem drucklosen Zustand an den Trägern fixiert ist. Auf diese Weise kann auch bei einem Ausfall der Druckversorgung ein sicherer Halt der Blasformteile an ihren jeweiligen Trägern erreicht werden.

Bei einer weiteren vorteilhaften Ausführungsform ist wenigstens ein Befestigungsmechanismus durch Beaufschlagung mit einem vorgegebenen (Über)Druck des fließfähigen Mediums (bei dem es sich insbesondere um Druckluft handelt) von einem verriegelten in einen entriegelten Zustand bringbar, wobei dieser vorgegebene Druck bevorzugt größer ist als 2 bar. Damit ist bevorzugt wenigstens ein Teil der Blasform und bevorzugt die gesamte Blasform über die Zuführung von Druckluft zu entriegeln. Bevorzugt ist dieser Druck größer als 3 bar, bevorzugt größer als 4 bar, bevorzugt größer als 5 bar, bevorzugt größer als 6 bar, bevorzugt größer als 7 bar und bevorzugt größer als 8 bar.

Vorteilhaft ist der genannte Druck, der zum Entriegeln der Blasform oder deren Teile dient, kleiner als 20 bar, bevorzugt kleiner als 18 bar, bevorzugt kleiner als 15 bar, bevorzugt kleiner als 12 bar und besonders bevorzugt kleiner als 11 bar. Anstelle von Druckluft könnte auch ein anderes Gas verwendet werden oder auch ein flüssiges Medium, insbesondere ein Hydraulikmedium.

Bevorzugt wird ein Druck in einem Bereich von 9 - 10 bar verwendet bzw. ein relativ hoher Druck, um so eine hohe Kraftdichte zu erreichen und um so vorteilhaft einen kleineren Bauraum zu realisieren. Es wäre jedoch auch möglich, einen Unterdruck zum Entriegeln der Blasformen anzuwenden.

Bei einer weiteren vorteilhaften Ausführungsform steht die Medienanschlusseinrichtung mittels wenigstens einer Zuführleitung, bevorzugt einer (wenigstens abschnittsweise) flexiblen Zuführleitung, mit wenigstens einem Befestigungsmechanismus in Strömungsverbindung. Vorteilhaft sind flexible Schläuche vorgesehen, welche von dem zentralen Medienanschluss zu den jeweiligen Aufnahmemitteln bzw. Befestigungsmechanismen der Blasform führen.

Vorteilhaft sind mehrere Zuführleitungen vorgesehen, welche den zentralen Medienanschluss mit den einzelnen Befestigungsmechanismen verbinden (um so eine Fluidverbindung zwischen der Medienanschlusseinrichtung und den Befestigungsmechanismen herzustellen). Bei einer weiteren vorteilhaften Ausführungsform ist der Medienanschluss ortsfest bzw. unbeweglich gegenüber der Umformungseinrichtung (insbesondere gegenüber einem Träger der Umformungseinrichtung) angeordnet. Genauer gesagt dreht sich dieser Medienanschluss im Arbeitsbetrieb bevorzugt mit den einzelnen Umformungsstationen der Umformungseinrichtung mit.

Besonders bevorzugt kann beispielsweise eine Vielzahl von derartigen Umformungsstationen vorgesehen sein und jede einzelne dieser Umformungsstationen kann jeweils den besagten zentralen Medienanschluss aufweisen. So kann beispielsweise eine Vielzahl derartiger Umformungseinrichtungen an einem drehbaren Träger angeordnet sein. Durch die jeweils einzelnen Medienanschlüsse ist jeweils eine Entnahme der einzelnen Blasformen je Umformungsstation möglich. Durch den zentralen Medienanschluss je Umformungsstation ist eine gleichzeitige Entriegelung aller Blasformteile (Bodenform und Seitenteile) möglich.

Bei einer weiteren vorteilhaften Ausführungsform kann die Zuführung des fließfähigen Mediums, insbesondere der Druckluft, zu der Medienanschlusseinrichtung wahlweise manuell, beispielsweise über einen durch den Bediener anzuschließenden Druckluftspiralschlauch oder automatisch, über einen durch eine Maschinensteuerung gestützten Aktor, etwa die vorgenannte Betätigungseinrichtung, erfolgen.

Bei einer weiteren vorteilhaften Ausführungsform weist die Blasform wenigstens ein weiteres bzw. zweites Seitenteil auf, welches lösbar an einem Träger angeordnet ist, sowie einen weiteren Befestigungsmechanismus, um das bzw. die Seitenteile an dem Träger bzw. an Trägern zu befestigen. Auf diese Weise weist die Blasform - wie oben erwähnt - bevorzugt zwei Seitenteile und ein Bodenteil auf. Bevorzugt weisen die Seitenteile, sowie die Bodenform den gleichen Befestigungsmechanismus auf.

Bei einer weiteren vorteilhaften Ausführungsform weist die Vorrichtung einen Verriegelungsmechanismus auf, der in einem Arbeitsbetrieb, und insbesondere gleichzeitig, die beiden Seitenteile bzw. deren Träger miteinander verriegelt. Weiterhin weist die Vorrichtung bevorzugt einen Antrieb auf, um die beiden Seitenteile zu schwenken bzw. zu öffnen, d.h. genauer auseinanderzuschwenken. Dabei ist es möglich, dass eine Maschinensteuerung vorgesehen ist, die während oder nach dem automatischen Zuführen des fließfähigen Mediums auch ein Öffnen und Entriegeln der Formträger (so dass die Blasformen entnommen werden können) steuert. Die Formträger werden vorteilhaft über ein zustellbares Kurvensegment geöffnet. Das Kurvenstück wird über einen Pneumatikzylinder angesteuert. Das Lösen Verriegelung geschieht ebenfalls über eine Kurve.

Wie unten genauer erläutert wird, kann auch an der oben erwähnten Betätigungseinrichtung ein erstes Stellglied und insbesondere eine Führungskurve zum Öffnen der Blasform vorgesehen sein und/oder ein zweites Stellglied und insbesondere eine zweite Führungskurve zum Entriegeln der Seitenteile der Blasform bzw. der Blasformträger.

Bei einer weiteren bevorzugten Ausführungsform weist der Befestigungsmechanismus eine Vorspanneinrichtung auf, welche kraft- und/oder formschlüssig wenigstens ein Blasformteil an dem diesem Blasformteil zugeordneten Träger fixiert. So kann insbesondere pro Blasformteil ein Spannelement vorgesehen sein, welches kraft- und formschlüssig die Blasformteile fixiert. Durch dieses Spannelement wird erreicht, dass in einem drucklosen Zustand eine Arretierung besteht. Durch die Zuführung von Druckluft kann diese Spannkraft des Spannelementes überwunden werden. Vorteilhaft ist daher diese Vorspanneinrichtung von dem fließfähigen Medium beaufschlagbar. Insbesondere ist die Vorspanneinrichtung von dem fließfähigen Medium beaufschlagbar, um eine Stellung der Vorspanneinrichtung zu ändern bzw. eines von der Vorspanneinrichtung betätigten Löseelementes. Vorteilhaft ist das fließfähige Medium über die oben genannten flexiblen Schläuche zuführbar.

Bevorzugt handelt es sich bei der Vorspanneinrichtung um ein elastisches Element und besonders bevorzugt um ein Federelement.

Bei einer weiteren vorteilhaften Ausführungsform sind die (Vor)spannelemente nicht in Teilen der Blasform, sondern in Teilen der Träger platziert, beispielsweise in der Formträgerschale links, der rechten Formträgerschale und dem Bodenträger. Auf diese Weise verbleiben bei einem Wechsel der Blasformen diese Elemente stets an der Umformungsstation.

Bei einer weiteren vorteilhaften Ausführungsform weist der Befestigungsmechanismus einen beweglichen Kolben auf, der über das fließfähige Medium in eine erste Position verschiebbar und/oder über die Vorspanneinrichtungen in eine zweite Position verschiebbar ist. Vorteilhaft handelt es sich bei der ersten Position um einen entriegelten Zustand, in dem die Blasform von den Trägern entnommen werden kann.

Bei einer weiteren vorteilhaften Ausführungsform ist der Befestigungsmechanismus derart gestaltet, dass bei einem unsachgemäßen Einlegen der Blasformteile die Formträger und die Bodenform nicht mehr geschlossen und verriegelt werden können. So kann beispielsweise das Spannelement mit einem korrespondierenden Gegenstück derart ausgeführt sein, dass nur bei einem sachgemäßen Einlegen der Blasformteile die Formträger geschlossen werden können. Auf diese Weise kann die Fehlersicherheit erhöht werden.

Es wird weiterhin darauf hingewiesen, dass die oben beschriebenen Merkmale auch mit einem vollautomatischen Blasformwechsel kombinierbar sind, d.h. einem Wechsel, bei dem die Blasformteile z.B. durch eine Robotereinrichtung eingewechselt werden.

Bei einer weiteren vorteilhaften Ausführungsform ist wenigstens ein Element der Betätigungseinrichtung dazu geeignet und bestimmt, eine form- und/oder kraftschlüssige Verbindung mit wenigstens einem Element der Umformungsstation herzustellen. Bevorzugt kann es sich bei dem Element der Umformungsstation um den oben besagten zentralen Medienanschluss handeln, wobei durch diese form- und/oder kraftschlüssige Verbindung die Zuführung eines fließfähigen Mediums, beispielsweise von Druckluft, zu den jeweiligen Befestigungsmechanismen möglich ist. Genauer kann eine form- und/oder kraftschlüssige Verbindung zwischen einer ortsfesten Plattform, beispielsweise einem Hauptträger der Vorrichtung und dem drehbar gelagerten Blasrad hergestellt werden.

Bei einer weiteren vorteilhaften Ausführungsform weist die Vorrichtung eine Positionierungseinrichtung auf, um die Umformungsstation gegenüber der Betätigungseinrichtung zu positionieren. Dabei kann beispielsweise an der Umformungsstation eine Nut oder dergleichen vorgesehen sein, in welche ein Gegenstück der Betätigungseinrichtung einfahren kann, um einen Formschluss und so eine genaue Positionierung zu erreichen. Umgekehrt kann jedoch auch eine Nut an der Betätigungseinrichtung vorgesehen sein, welche mit einem entsprechenden Gegenstück der Umformungseinrichtung zusammenwirkt.

Bei einer weiteren vorteilhaften Ausführungsform wird die oben erwähnte form- und/oder kraftschlüssige Verbindung mittels eines an der Plattform angebrachten Aktors hergestellt. Dabei kann beispielsweise dieser Aktor in einer vertikalen Richtung angehoben werden und an einen Bereich der Umformungsstation herangeführt werden.

Durch diese Vorgehensweise kann für den Wechselvorgang eine exakte Positionierung der Umformungsstation bzw. des Trägers mit den Umformungsstationen erreicht werden. Alternativ bzw. anstelle einer formschlüssigen und/oder genauen Positionierung des Blasrades bzw. der Umformungsstationen wäre es auch denkbar, ein Kamerasystem für den Formwechselvorgang zur Verfügung zu stellen. Dieses Kamerasystem könnte beispielsweise in einen Roboterkopf integriert sein, um die genaue Position von Form und Blasstationen zu erkennen.

Bei einer weiteren vorteilhaften Ausführungsform stellt die Betätigungseinrichtung eine Fluidverbindung her, so dass wenigstens ein Befestigungsmechanismus mit einem fließfähigen Medium beaufschlagbar ist, um diesen Befestigungsmechanismus zwischen wenigstens zwei Positionen zu schalten. Auf diese Weise kann - wie oben erwähnt - der Befestigungsmechanismus von einem arretierten Zustand (drucklos) in einen gelösten Zustand (druckbeaufschlagt) übergeführt werden, der dann eine Entnahme der Blasstationen ermöglicht.

Bei einer weiteren vorteilhaften Ausführungsform weist die Betätigungseinrichtung ein Aktorelement auf, wobei bevorzugt dieses Aktorelement ein erstes formschlüssiges Element aufweist, welches dazu geeignet und bestimmt ist, mit einem zweiten formschlüssigen Element, welches an der Umformungsstation und/oder dem Blasrad angeordnet ist, zusammenzuwirken, um so eine formschlüssige Verbindung herzustellen. Bevorzugt ist daher ein formschlüssiges Element an dem Aktor vorgesehen, welches in eine korrespondierendes Gegenelement an der Umformungsstation eingreifen kann. Umgekehrt könnte jedoch auch das Gegenelement an der Umformungsstation formschlüssig in das Aktorelement eingreifen.

Vorteilhaft weisen sämtliche Umformungsstationen die oben erwähnten Gegenelemente auf, so dass jede einzelne Umformungsstation eine genaue Position bezüglich der Betätigungseinrichtung anfahren kann. Dabei wäre es möglich, dass diese ineinandergreifenden Elemente damit an jeder Umformungsstation angeordnet sind sowie auch an dem Aktorelement.

Bevorzugt sind an den Umformungsstationen die Elemente an einem Formträgerhalter oder direkt an dem Blasrad angebracht.

Bevorzugt wird auf diese Weise ein automatisches Zubringen eines Druckluftanschlusses zur Versorgung der Stationen bzw. der Befestigungsmechanismen erreicht. Genauer gesagt können bevorzugt je Umformungsstation die oben erwähnten Spannelemente wiederum zentral über einen gemeinsamen Medienanschluss zum Ent- bzw. Verriegeln versorgt werden.

Bei einer weiteren vorteilhaften Ausführungsform weist die Betätigungseinrichtung wenigstens ein Stellglied auf, um ein Öffnen und/oder Schließen der Formträger und/oder der Blasform auf und/oder ein Stellglied zum Verriegeln und/oder Entriegeln des Formträgers. Bevorzugt weist die Betätigungseinrichtung zwei derartige Stellglieder auf, um sowohl einen Offnen und/oder Schließen der Formträger und/oder der Blasform zu bewirken als auch ein Stellglied zum Verriegeln und/oder Entriegeln des Formträgers.

Bevorzugt kann durch diese Stellglieder ein Öffnen und/oder Schließen der Blasform und/oder ein Entriegeln und/oder Verriegeln während eines Stillstands der Umformungsstation bzw. während eines Stillstands des Trägers, an dem die Umformungsstationen angeordnet sind, erfolgen. In einem normalen Arbeitsbetrieb erfolgt bevorzugt ein Öffnen und Schließen der Blasform und/oder ein Verriegeln bzw. Entriegeln während einer Bewegung der Umformungsstationen und insbesondere auch gerade durch diese Bewegung.

Bei einer weiteren vorteilhaften Ausführungsform handelt es sich bei wenigstens einem dieser Stellglieder und bevorzugt bei beiden Stellgliedern um eine Führungskurve bzw. diese Stellglieder weisen eine Führungskurve auf. Bevorzugt ist dieses Stellglied und insbesondere diese Führungskurve beweglich. Bevorzugt ist auch eine Antriebseinrichtung vorgesehen, um wenigstens eines dieser Stellglieder zu bewegen. Bevorzugt ist je ein Antrieb vorgesehen, um diese Stellglieder zu bewegen. Bevorzugt handelt es sich bei wenigstens einer dieser Antriebseinrichtungen um eine Antriebseinrichtung, welche aus einer Gruppe von Antriebseinrichtungen ausgewählt ist, welche elektrische Antriebseinrichtungen, pneumatische Antriebseinrichtungen, hydraulische Antriebseinrichtungen, magnetische Antriebseinrichtungen und dergleichen enthält.

Durch die Drehung des Blasrads fährt bevorzugt eine Formträgeransteuerrolle (für Öffnen/Schließen) in das Stellglied, insbesondere das Kurvensegment ein. Nachdem das Blasrad steht (und bevorzugt auch zentriert wurde und bevorzugt die Druckluftverbindung zwischen Aktor und Blasstation hergestellt wurde), wird das Stellglied bzw. Kurvensegment geschaltet und die Öffnungsbewegung eingeleitet, während bevorzugt ein zweites Kurvensegment geschaltet wird, um die Verriegelung zu lösen. Das Schalten der Segmente funktioniert bevorzugt über Pneumatikzylinder.

Bei einer weiteren bevorzugten Ausführungsform ist der erste Befestigungsmechanismus mittels eines fließfähigen Mediums betätigbar, um das Bodenteil gegenüber dem Träger zu entriegeln und der zweite Befestigungsmechanismus ist ebenfalls mittels eines fließfähigen Mediums betätigbar, um das Seitenteil bzw. die Seitenteile von dem oder den Trägern zu entriegeln, wobei weiterhin eine Medienanschlusseinrichtung vorgesehen ist, um das fließfähige Medium den Befestigungsmechanismen zuzuführen.

Bei einer weiteren vorteilhaften Ausführungsform weist die Vorrichtung eine Greifeinrichtung auf, um eine Blasform oder Teile der Blasform von der Umformungsstation zu entnehmen. So kann bei einer weitgehend automatisierten Ausgestaltung eine Robotereinrichtung vorgesehen sein, welche die Blasform nach dem Entriegeln von den Umformungsstationen entnimmt. Durch die genaue Positionierung des Blasrades ist es möglich, dass auch diese Robotereinrichtung sehr genau und präzise für die Entnahme gesteuert werden kann.

Bei einer weiteren vorteilhaften Ausführungsform weist die Vorrichtung ein Kupplungselement auf, um eine Strömungsverbindung für das fließfähige Medium herzustellen. Dabei kann in der oben erwähnten Betätigungseinrichtung ein entsprechendes Kupplungsstück vorgesehen sein, welches mit einem weiteren Kupplungsstück an der Umformungsstation zusammenwirkt.

Bevorzugt ist dabei dieses Kupplungselement für die Anbindung des Druckluftanschlusses in das formschlüssige Element der Aktoreinrichtung integriert. Dies bedeutet, dass bei einem Einfahren des Aktors in das Gegenelement auch die Druckverbindung hergestellt wird. Damit ist es möglich, dass ein Ankuppeln dieses Druckluftanschlusses über eine Ausfahrbewegung des Aktorelementes erfolgt.

Bevorzugt weist die Vorrichtung, insbesondere die Umformungsstation wenigstens eine erste Anschlusseinrichtung auf, um der Vorrichtung, insbesondere der Umformungsstation und insbesondere auch dem Bodenteil und/oder den Seitenteilen ein fließfähiges Temperiermedium zuzuführen, wobei besonders bevorzugt diese Zuführung des Temperiermediums über eine Anschlusseinrichtung (insbesondere mittels einer durch die Anschlusseinrichtung tretenden Strömung) durch eine Entfernung bzw. eine Entfernungsbewegung des Bodenteils von dem Träger trennbar bzw. unterbrechbar ist.

Bevorzugt weist dieser erste Befestigungsmechanismus ein in einer vorgegebenen geraden Richtung verschiebbares Löseelement auf, wobei durch eine Verschiebung dieses Löseelementes in eine erste vorgegebene Position die Befestigung des Bodenteils an dem Träger lösbar ist und durch eine Verschiebung dieses Löseelementes in eine zweite vorgegebene Position das Bodenteil an dem Träger befestigbar ist.

Es wird daher vorgeschlagen, dass bevorzugt die Befestigung des Bodenteils bzw. ein Lösen dieser Befestigung durch eine geradlinige Bewegung dieses genannten Löseelementes erreicht wird. Diese besagte geradlinige Bewegung kann auf relativ einfache Weise etwa durch pneumatische Mittel erreicht werden. Auf diese Weise kann ein automatisiertes Entfernen des Bodenteils von der Blasform erreicht werden. Vorteilhaft handelt es sich bei dem Löseelement um ein Stellelement, welches zumindest mittelbar eine Arretierung der Befestigung bzw. ein Lösen dieser Arretierung bewirkt. Dabei ist es möglich, dass durch dieses Löseelement bzw. Stellelement wiederum ein weiteres Element betätigt bzw. bewegt wird, und durch diese Betätigung die Arretierung bzw. Lösung der Arretierung erreicht wird. Bevorzugt kann daher das Stellelement zum Arretieren in eine erste Richtung bewegt werden und zum Lösen der Arretierung in eine zweite Richtung, welche der ersten Richtung entgegengesetzt ist.

Wie oben erwähnt, ist es bei der Fertigung der Behältnisse teilweise erforderlich, dass die jeweiligen Blasformen bzw. auch deren Bodenteile temperiert und insbesondere gekühlt werden. Zu diesem Zweck dient die hier beschriebene Anschlusseinrichtung, mittels derer letztlich das Bodenteil an eine Temperiermittel- und insbesondere eine Wasserversorgung angeschlossen werden kann. Durch eine Entfernung des Bodenteils von dem Träger kann damit (insbesondere im Wesentlichen gleichzeitig) auch die Temperiermittelversorgung unterbrochen werden.

Vorteilhaft weist der zweite Befestigungsmechanismus ein in einer vorgegebenen geraden Richtung verschiebbares Löseelement auf, und durch eine Verschiebung dieses Löseelements in eine erste vorgegebene Position ist die Befestigung des Seitenteils an dem Träger lösbar und durch eine Verschiebung dieses Löseelements in eine zweite vorgegebene Position ist das Seitenteil an dem Träger befestigbar.

Es wird also im Rahmen einer vorteilhaften Ausführungsform der Erfindung für die Befestigung des Seitenteils bzw. der Seitenteile der gleiche Mechanismus vorgeschlagen wie für das Bodenteil. Im Rahmen der nachfolgenden Figurenbeschreibung wird der Befestigungsmechanismus des Bodenteils beschrieben. Ein entsprechender Befestigungsmechanismus wird auch zur Befestigung der Seitenteile verwendet. Dieser Befestigungsmechanismus ist jedoch im Einbauzustand gegenüber dem Befestigungsmechanismus des Bodenteils im Wesentlichen um 90° gedreht. Bevorzugt sind zwei derartige Befestigungsmechanismen zum Halten der Seitenteile vorgesehen (pro Seitenteil ein Befestigungsmechanismus).

Der hier beschriebene Befestigungsmechanismus bietet den Vorteil, dass er eine automatische Lösung und/oder Befestigung des Seitenteils bzw. Bodenteils von bzw. an dem Träger ermöglicht. Bevorzugt handelt es sich bei dem Träger des Seitenteils um eine sog. Blasformträgerschale. Bei einem Einwechseln des Seitenteils kann diese Blasformträgerschale an einem Blasformträger befestigt bleiben und das Seitenteil wird von der Blasformträgerschale gelöst. Damit ist dieser Befestigungsmechanismus bevorzugt zwischen der Blasformträgerschale und dem Seitenteil ausgebildet.

Es wäre jedoch auch denkbar, dass dieser Befestigungsmechanismus zwischen dem Blasformträger und der Blasformträgerschale ausgebildet ist oder zwischen dem Blasformträger und dem Seitenteil. Bevorzugt ist das Seitenteil unmittelbar an der Blasformträgerschale angeordnet.

Bevorzugt weist dabei die Umformungsstation wenigstens eine erste Anschlusseinrichtung auf, um der Umformungsstation und insbesondere dem Seitenteil ein fließfähiges Temperiermedium zuzuführen, und diese Zuführung des Temperiermediums ist über die Anschlusseinrichtung durch eine Entfernung des Seitenteils von dem Träger trennbar. Es wird daher auch für das Seitenteil vorgeschlagen, dass dieses Temperierkanäle aufweist, durch welche ein Temperiermedium fließen kann, um so dieses Seitenteil zu temperieren, etwa zu kühlen.

Im Folgenden wird die Ausgestaltung dieser Temperierung und auch des Befestigungsmechanismus überwiegend unter Bezugnahme auf das Bodenteil beschrieben. Es wird jedoch darauf hingewiesen, dass diese Ausgestaltungen entsprechend auch auf die Befestigung des Seitenteils anwendbar sind.

Bei einer vorteilhaften Ausführungsform ist das Bodenteil über wenigstens einen Zwischenträger an dem genannten Träger angeordnet. Dabei ist es möglich, dass an dem Bodenteil der Zwischenträger angeordnet ist und dieser beispielsweise auch als Abstandshalter fungiert. Auch kann bevorzugt an diesem Zwischenträger, ggf. jedoch auch an dem Bodenteil selbst, ein Befestigungsteil angeordnet sein und an diesem Befestigungsteil wiederum ein Teil des Befestigungsmechanismus.

Bei einer weiteren vorteilhaften Ausführungsform weist, wie oben ausgeführt die Vorrichtung bzw. die Umformungsstation auch zwei Seitenteile auf, welche bevorzugt gemeinsam mit dem Bodenteil den Hohlraum begrenzen, innerhalb dessen die Kunststoffvorformlinge zu den Kunststoffbehältnissen umgeformt werden.

Vorteilhaft sind auch die oben erwähnten Seitenteile der Blasformeinrichtung jeweils an einem Blasformträger angeordnet. Bevorzugt sind dabei die Seitenteile an Blasformträgerschalen angeordnet und diese Blasformträgerschalen wiederum an Blasformträgern. Vorteilhaft sind die Blasformträger, an denen die Seitenteile angeordnet sind, um eine Schwenkachse, insbesondere eine gemeinsame Schwenkachse schwenkbar, um auf diese Weise die Blasformeinrichtung zu öffnen und zu schließen. Vorteilhaft verläuft dabei diese Schwenkachse parallel zu der Längsrichtung eines Kunststoffvorformlings bzw. auch eines hieraus herzustellenden Kunststoffbehältnisses.

Vorteilhaft weist die Vorrichtung weiterhin eine Beaufschlagungseinrichtung auf, um die Kunststoffvorformlinge mit einem fließfähigen und insbesondere mit einem gasförmigen Medium (insbesondere mit Druckluft) zu beaufschlagen. Bei dieser Beaufschlagungseinrichtung handelt es sich vorteilhaft um eine Blasdüse, welche an den Kunststoffvorformling angesetzt werden kann, um diesen so zu expandieren. Vorteilhaft ist dabei die Beaufschlagungseinrichtung mittels einer Antriebseinrichtung auf den Kunststoffvorformling zustellbar. Bei einer weiteren vorteilhaften Ausführung weist die Vorrichtung auch ein stangenförmiges Element auf, welches in das Innere der Kunststoffvorformlinge einführbar ist, um diese in ihrer Längsrichtung zu dehnen. Damit weist die Vorrichtung bevorzugt eine sogenannte Reckstange auf und es handelt sich bei der Vorrichtung vorteilhaft um eine Streckblasmaschine.

Bei einer weiteren vorteilhaften Ausführungsform können die Seitenteile auch zum Schließen der Blasform in Bereiche des Bodenteils eingreifen. Bei einer weiteren vorteilhaften Ausführungsform weist die Vorrichtung eine Vielzahl von Umformungsstationen auf, die besonders bevorzugt an einem gemeinsamen Träger angeordnet sind. Dabei handelt es sich bei diesem Träger insbesondere um einen drehbaren Träger wie ein sog. Blasrad.

Vorteilhaft ist zwischen den Blasformträgerteilen und den Blasformteilen bzw. Seitenteilen wenigstens ein mit einem gasförmigen Medium beaufschlagbarer Raum ausgebildet. Auf diese Weise kann insbesondere ein Druckkissen ausgebildet werden, mittels dessen ein Blasformteil während des Expansionsvorganges auf das andere Blasformteil zugestellt werden kann. Vorteilhaft weist damit wenigstens ein Blasformteil gegenüber demjenigen Blasformträgerteil, an dem es angeordnet ist, ein gewisses mechanisches Spiel in einer Richtung auf, welche senkrecht zu einer Ebene steht, welche in einem geschlossenen Zustand der Blasform zwischen den beiden Blasformteilen definiert wird.

Bei einer weiteren vorteilhaften Ausführungsform ist das oben erwähnte Lösungselement automatisch betätigbar bzw. bewegbar. Vorteilhaft ist dieses Löseelement durch ein Fließmittel betätigbar, also insbesondere hydraulisch oder pneumatisch betätigbar. Es wäre jedoch auch denkbar, dass das Löseelement durch eine Magnetkraft betätigt wird. So wäre es denkbar, dass eine Robotereinrichtung vorgesehen ist, welche einen derartigen Wechsel des Bodenteils und/oder der Seitenteile automatisch durchführt. Dazu könnte zunächst der Befestigungsmechanismus gelöst und anschließend das betreffende Seitenteil entnommen werden. Vorteilhaft ist das Löseelement für einen Benutzer bzw. Bediener nicht zugänglich, ohne dass hierzu der Befestigungsmechanismus gelöst und das Blasformteil abgenommen wird, beispielsweise indem es innerhalb des erwähnten Trägers angeordnet ist.

Bevorzugt weist die erfindungsgemäße Vorrichtung die beschriebenen Befestigungsmechanismen sowohl für das oder die Seitenteile der Blasformeinrichtung als auch für das Bodenteil auf. So wäre es möglich, dass automatisiert sowohl die Befestigungen der Seitenteile als auch des Bodenteils gelöst oder hergestellt werden. Weiterhin wäre es denkbar, dass, insbesondere nach einem Lösen der jeweiligen Befestigungsmechanismen die Blasformeinrichtung in ihrer Gesamtheit von der Umformungsstation entnommen wird. Dabei wäre es insbesondere denkbar, dass weitere Arretiermechanismen vorgesehen sind, welche die Seitenteile und das Bodenteil der Blasform, insbesondere für einen Montage- und einen Demontagevorgang aneinander befestigen, damit die Blasformeinrichtung in einem zusammengesetzten Zustand montiert oder demontiert werden kann.

Weiterhin kann beispielsweise der Träger eine Kontaktfläche aufweisen, welche in einem montierten Zustand an einem zumindest mittelbar an dem Bodenteil (bzw. dem Seitenteil) befestigten Befestigungselement (bzw. einer entsprechenden Kontaktfläche dieses Befestigungselements anliegt und ein erster Bestandteil der Befestigungseinrichtung kann innerhalb dieser Kontaktfläche angeordnet sein. Bevorzugt ist in einem arretierten Zustand des Bodenteils bzw. des Seitenteils an dem Träger die Befestigungseinrichtung in Umfangsrichtung vollständig von Bereichen bzw. Material des Trägers umgeben. Vorteilhaft weist das Löseelement einen kreisförmigen Querschnitt auf.

Bei einer weiteren vorteilhaften Ausführungsform weist die Vorrichtung eine Führungseinrichtung auf, welche das Löseelement führt. Dabei kann beispielsweise ein Hülsenkörper vorgesehen sein, innerhalb dessen das Löseelement verschiebbar gelagert ist. Umgekehrt kann jedoch (bevorzugt) das Führungselement auch als stangenartiger Körper ausgebildet sein, der wiederum in das Löseelement eingreift und so eine Führung des Löseelementes bewirkt.

Vorteilhaft ist das Löseelement (welches zum Befestigen des Bodenteils dient) in der Längsrichtung der zu expandierenden Kunststoffvorformlinge betätigbar. Vorteilhaft handelt es sich hierbei um die gleiche Richtung, in der auch die oben erwähnte Reckstange in das Innere der Kunststoffvorformlinge eingeführt wird. Vorteilhaft ist das Löseelement (welches zum Befestigen des Seitenteils dient) im Wesentlichen senkrecht zu der Längsrichtung der zu expandierenden Kunststoffvorformlinge betätigbar. Im Falle der Befestigung der Seitenteile ist bevorzugt das Löseelement verschieblich an der Blasformträgerschale angeordnet.

Vorteilhaft kann durch eine Entfernung des Bodenteils bzw. des Seitenteils von dem jeweiligen Träger (im Falle des Seitenteils insbesondere der Blasformträgerschale) auch dieser Anschluss für das Temperiermedium bzw. das Kühlmittel getrennt werden. Bevorzugt kann in dem gleichen Arbeitsschritt, wenn auch nicht notwendig zeitgleich, sowohl das Bodenteil bzw. das Seitenteil von dem Träger gelöst als auch die Versorgung mit dem Temperiermedium unterbrochen werden. So ist bevorzugt möglich, dass beispielsweise das Bodenteil - ggf. gemeinsam mit einem an dem Bodenteil angeordneten Zwischenträger und/oder einem Befestigungselement - von dem Träger abgehoben und damit getrennt wird und durch den gleichen Vorgang auch die Verbindung(en) für das Temperiermedium unterbrochen werden. Bevorzugt können die Verbindungen für das Temperiermedium durch eine Zustellbewegung des Bodenteils auf den Träger zu hergestellt werden.

Bei einer weiteren vorteilhaften Ausführungsform ist das Bodenteil bzw. das Seitenteil nach einem Lösen des Befestigungsmechanismus durch eine Bewegung in einer geraden Richtung entfernbar. Vorteilhaft handelt es sich hierbei im Falle des Bodenteils bzw. des Seitenteils um die gleiche Richtung, in der auch das Löseelement bewegbar ist. Im Falle des Bodenteils kann es sich hierbei um eine Richtung handeln, die parallel zu der Längsrichtung der Kunststoffvorformlinge ist, im Falle des Seitenteils um eine Richtung, welche im Wesentlichen senkrecht zu der Längsrichtung der Kunststoffvorformlinge steht. Bevorzugt sind bewegliche Elemente der jeweiligen Befestigungsmechanismen wie insbesondere das Löseelement und/oder das Arretierelement an den jeweiligen Trägern angeordnet. Dies hat den Vorteil, dass diese Elemente bei einem Auswechseln der Blasformeinrichtungen an der Maschine verbleiben.

Bei einer weiteren vorteilhaften Ausführungsform weist die erste Anschlusseinrichtung ein erstes Anschlusselement auf sowie ein zweites Anschlusselement, welche durch eine Relativbewegung des einen Anschlusselementes gegenüber dem anderen Anschlusselement in einer geraden Richtung miteinander koppelbar sind, um der Umformungsstation und insbesondere dem Bodenteil bzw. dem Seitenteil der Blasformeinrichtung das fließfähige Temperiermedium zuzuführen. Durch diese An- und/oder Entkoppelbarkeit der Anschlusseinrichtungen ist es daher möglich, dass durch die gleiche Bewegung, nämlich eine Entfernungsbewegung der Blasform von dem Träger, auch die Anschlüsse getrennt werden und umgekehrt bei einer Zuführung des Blasformteils auf den Träger auch die Anschlusseinrichtungen bzw. deren Anschlusselemente miteinander verbunden werden.

Vorteilhaft weist wenigstens ein Anschlusselement und insbesondere ein Anschlusselement, welches zumindest mittelbar an dem Blasformteil angeordnet ist, eine Ventileinrichtung auf, welches bei einer Trennung der Anschlusselemente schließt, so dass nach dem Trennvorgang kein Temperiermedium aus dem Bodenteil strömen kann.

Mit anderen Worten kann durch eine Relativbewegung der Anschlusselemente bezüglich einander eine Fluidverbindung zwischen einer Temperiermittelversorgung und dem Bodenteil bzw. den Seitenteilen hergestellt bzw. auch unterbrochen werden.

Bei einer weiteren vorteilhaften Ausführungsform entspricht die erwähnte gerade Richtung auch der Entfernungsrichtung des Bodenteils bzw. des Seitenteils und/oder der Bewegungsrichtung des Löseelementes.

Bei einer weiteren vorteilhaften Ausführungsform weist das Löseelement einen stangenförmigen Körper auf und/oder einen Körper, der sich in der oben erwähnten Bewegungsrichtung des Löseelementes erstreckt.

Vorteilhaft erstreckt sich auch wenigstens ein Anschlusselement und besonders bevorzugt erstrecken sich beide Anschlusselemente in der oben erwähnten Richtung, in der auch das Löseelement bewegbar ist. Falls also, wie im Stand der Technik häufig der Fall, Kunststoffvorformlinge in einem stehenden Zustand in die Blasform eingebracht werden, wobei ihre Mündung nach oben ausgerichtet ist, erstrecken sich vorteilhaft (im Falle des Bodenteils) auch die Anschlusselemente in der Längsrichtung der Kunststoffvorformlinge und (im Falle des oder der Seitenteile) im Wesentlichen senkrecht zu dieser Längsrichtung. Bevorzugt sind die Anschlusselemente als Stecker und Kupplung ausgeführt.

Auf diese Weise ist ein Wechsel des Bodenteils und/oder des Seitenteils automatisch durchführbar. So kann beispielsweise mittels eines Wechselroboters das Bodenteil ergriffen werden und nach Lösen des Befestigungsmechanismus von dem Träger entnommen werden. Bevorzugt kann in dem gleichen Arbeitsgang auch die Temperiermittelverbindung gelöst werden. Durch die oben beschriebenen Vorgehensweisen ist eine automatische Betätigung des Löseelements möglich, insbesondere im Rahmen eines Wechselprozesses der Blasform. Dabei kann, wie oben erwähnt, das Löseelement automatisch bewegt werden.

Bei einer weiteren vorteilhaften Ausführungsform weist die Vorrichtung eine zweite Anschlusseinrichtung auf, um das Temperiermedium von dem Bodenteil abzuführen. Auf diese Weise kann das Bodenteil in einen Temperierkreislauf eingebunden werden. Vorteilhaft ist auch diese Zuführung durch eine Entfernung des Bodenteils trennbar. Dabei ist es auch hier bevorzugt, dass die zweite Anschlusseinrichtung zwei Anschlusselemente aufweist, welche durch eine Relativbewegung und insbesondere eine Relativbewegung in der oben beschriebenen Richtung miteinander verbindbar oder lösbar sind. Auf diese Weise ist es auch möglich, das Bodenteil automatisch in einen Temperierkreislauf einzubinden.

Bei einer weiteren vorteilhaften Ausführungsform sind die Anschlusseinrichtungen und/oder Anschlusselemente in der oben besagten Richtung, d.h. derjenigen Richtung, in der auch das Bodenteil von dem Träger abgenommen wird, versetzt zueinander angeordnet. Auf diese Weise ist es möglich, dass bei einer Montage des Bodenteils an dem Träger zunächst eine Anschlusseinrichtung betätigt bzw. angeschlossen wird und anschließend die andere. Auf diese Weise ist ein zeitlich versetztes Anschließen der beiden Anschlusseinrichtungen bzw. der jeweiligen Anschlusselemente an einen Temperierkreislauf möglich.

Durch eine federbelastete Anordnung des einen Anschlusselementes kann erreicht werden, dass bei einer Zustellung des Bodenteils an den Träger zunächst das jeweilige Anschlusselement bewegt wird, bevor es mit dem anderen Anschlusselement zusammenwirkt bzw. mit diesem zusammengeschlossen wird. Auch kann durch diese federbelastete Anordnung des Anschlusselements eine selbsttätige Rückstellung dieses Anschlusselements in eine vorgegebene Ausgangsposition erreicht werden.

Bei einer weiteren vorteilhaften Ausführungsform weist der Befestigungsmechanismus ein Arretierelement auf, welches durch eine Bewegung des Löseelementes in der Richtung zwischen wenigstens zwei Positionen bewegbar ist, wobei in einer dieser Positionen eine Arretierung zwischen dem Träger und dem Bodenteil bzw. dem Seitenteil hergestellt ist und in der anderen Position eine Arretierung zwischen dem Träger und dem Bodenteil bzw. dem Träger und dem Seitenteil gelöst ist.

So wäre es beispielsweise möglich, dass das Löseelement in der Längsrichtung der Kunststoffvorformlinge bewegt wird und hierdurch eine Querbewegung des Arretierelementes ausgelöst wird. Bevorzugt weist das Löseelement einen sich erweiternden Abschnitt, beispielweise einen sich kegelförmig erweiternden Abschnitt auf bzw. eine Schrägfläche, welche bevorzugt in Kontakt mit dem Arretierelement steht. Durch eine Bewegung des Löseelementes in der oben beschriebenen Richtung kann auf diese Weise auch eine Bewegung des Arretierelementes insbesondere in einer hierzu senkrechten oder schrägen Richtung erreicht werden.

Durch diese Bewegung des Arretierelementes ist es möglich, dass in Folge einer Bewegung des Löseelementes das Arretierelement in ein weiteres Element der Befestigungseinrichtung eingreift. Vorteilhaft sind das Arretierelement und besonders bevorzugt auch das Löseelement an dem Träger angeordnet. Ein entsprechender Hinterschnitt bzw. eine Eingriffsausnehmung, in welche das Arretierelement eingreifen kann, ist besonders bevorzugt zumindest mittelbar an dem Bodenteil, beispielsweise an dem Zwischenträger oder einem an dem Zwischenträger fest angeordneten Befestigungskörper angeordnet.

Bei einer weiteren vorteilhaften Ausführungsform ist das Arretierelement durch die Bewegung des Löseelementes in einer von der Bewegungsrichtung des Löseelementes abweichenden Richtung bewegbar.

Wie erwähnt, ist bevorzugt an dem Löseelement eine Schrägfläche, d.h. eine bezüglich der Längsrichtung ausgebildete Schrägfläche angeordnet, welche eine Kontaktfläche mit dem Arretierelement bildet.

Bei einer weiteren bevorzugten Ausführungsform ist es auch möglich, dass mehrere der beschriebenen Arretierelemente vorgesehen sind. Dabei ist es möglich, dass durch eine Bewegung des Löseelementes mehrere Arretierelemente gleichzeitig bewegt werden und beispielsweise in entsprechende Ausnehmungen eines Halteelementes eingeführt werden. Auch könnte es sich bei dem Arretierelement um ein ringförmiges Element handeln, welches das Löseelement und insbesondere die Schrägfläche dieses Löseelements in dessen Umfangsrichtung umgibt. Bevorzugt ist das Arretierelement in einer bezüglich der Längsrichtung des Löseelements radial verlaufenden Richtung bewegbar. Bevorzugt kann das Arretierelement einen Abschnitt eines weiteren Befestigungselements und insbesondere eines an mittelbar an dem Bodenteil angeordneten Befestigungselements hintergreifen.

Bei einer weiteren vorteilhaften Ausführungsform ist die besagte Befestigungseinrichtung wenigstens abschnittsweise zwischen den Anschlusseinrichtungen angeordnet. So ist es beispielsweise möglich, dass die Befestigungseinrichtung bezogen beispielsweise auf eine Längsrichtung der Kunststoffvorformlinge in einem radial innenliegenden Bereich des Trägers und eine Befestigungselementes angeordnet ist. Auf diese Weise ist die Befestigungseinrichtung bevorzugt stets innerhalb des Trägers angeordnet und insbesondere von außen nicht zugänglich.

Bei einer weiteren vorteilhaften Ausführungsform weist die Befestigungseinrichtung einen Aufnahmeraum auf, der zur Aufnahme eines gasförmigen Mediums geeignet ist. Dieser Aufnahmeraum kann dabei mit einem Pneumatikmittel, beispielsweise mit Druckluft beaufschlagt werden, um so das Löseelement zu bewegen. So kann beispielsweise an dem Löseelement ein Kolben angeordnet sein, der innerhalb des besagten Aufnahmeraums angeordnet sind. Dieser Kolben kann mit Druckluft beaufschlagt werden, um so das Löseelement zu bewegen. Weiterhin ist es möglich, dass Dichtelemente vorgesehen sind, um den Kolben gegenüber dem Aufnahmeraum abzudichten.

Bei einer weiteren vorteilhaften Ausführungsform weist der Befestigungsmechanismus eine Vorspanneinrichtung auf, welche das Löseelement in eine vorgegebene Richtung drängt. Vorteilhaft handelt es sich hierbei um eine Richtung, welche eine Arretierposition bedingt. Vorteilhaft handelt es sich hierbei um eine Position, in der das Arretierelement in Richtung einer Ausnehmung zugestellt wird, um so eine Arretierung herzustellen. Bei einer weiteren bevorzugten Ausführungsform kann diese Vorspanneinrichtung auch in einem arretierten Zustand des Bodenteils dieses Bodenteil auf den Träger zu spannen.

Bei einer weiteren vorteilhaften Ausführungsform weist die Vorrichtung einen Bodenteilzwischenträger auf, an dem eine Ausnehmung angeordnet ist, in der wiederum zumindest Teile der Befestigungseinrichtung angeordnet sind.

Bei einer weiteren vorteilhaften Ausführungsform weist die Befestigungseinrichtung einen Aufnahmeraum zur Aufnahme eines Pneumatikmediums auf. Wenn dieser Aufnahmeraum mit einem Pneumatikmedium und insbesondere mit Druckluft beaufschlagt wird, kann hierdurch das Löseelement bewegt werden. Es wäre jedoch auch denkbar, dass das Löseelement unter Verwendung magnetischer Kräfte bewegt wird.

Bei einer weiteren vorteilhaften Ausführungsform ist wenigstens das Bodenteil und/oder wenigstens ein Seitenteil (und bevorzugt beide Seitenteile) automatisch von dem jeweiligen Träger, an dem dieses Bodenteil oder dieses Seitenteil angeordnet ist, entfernbar. Verfahrensseitig wird bevorzugt das Lösen des Bodenteils oder Seitenteils von dem Träger und/oder das Befestigen des Bodenteils oder Seitenteils an dem Träger automatisch durchgeführt. Zu diesem Zweck kann beispielsweise eine Robotereinrichtung die Blasformeinrichtung greifen, es können die Befestigungsmechanismen gelöst werden und die Blasformeinrichtung kann von der Umformungsstation entnommen werden. Bevorzugt kann dabei die Blasformeinrichtung in ihrer Gesamtheit von der Umformungsstation entnommen werden.

Bei einer weiteren bevorzugten Ausführungsform ist die Betätigung des Befestigungsmechanismus für den Boden mit der Betätigung des Befestigungsmechanismus für wenigstens ein Seitenteil gekoppelt. Eine derartige Kopplung kann dabei pneumatisch erfolgen, es wäre jedoch auch denkbar, dass diese Kopplung hydraulisch oder über eine (elektronische) Steuerung erfolgt. Auf diese Weise ist es möglich, insbesondere automatisch sämtliche Befestigungsmechanismen im Wesentlichen, aber nicht zwingendgleichzeitig, jedoch in einem Arbeitsschritt zu lösen (um dann die Blasform entnehmen zu können) oder zu verriegeln (um so die Blasform an der Umformungsstation anordnen zu können).

Die vorliegende Erfindung ist weiterhin auf ein Verfahren zum Betreiben einer Vorrichtung zum Umformen von Kunststoffvorformlingen zu Kunststoffbehältnissen gerichtet, wobei in einem Arbeitsbetrieb die Kunststoffvorformlinge durch Beaufschlagung mit einem fließfähigen Medium innerhalb einer Blasformeinrichtung expandiert werden wobei die Blasform ein Bodenteil aufweist, welches lösbar an einem Träger angeordnet ist, und mit einem ersten Befestigungsmechanismus das Bodenteil an dem Träger zu befestigt wird, und wobei die Blasform wenigstens ein Seitenteil aufweist, welches lösbar an einem Träger angeordnet ist und mit einem zweiten Befestigungsmechanismus das Seitenteil an dem Träger befestigt wird.

Erfindungsgemäß wird der erste Befestigungsmechanismus mittels eines fließfähigen Mediums betätigt, um das Bodenteil gegenüber dem Träger zu entriegeln und der zweite Befestigungsmechanismus wird mittels eines fließfähigen Mediums betätigt, um das Seitenteil von dem Träger zu entriegeln, wobei weiterhin eine Medienanschlusseinrichtung vorgesehen ist, um das fließfähige Medium den Befestigungsmechanismen zuzuführen.

Es wird daher auch verfahrensseitig vorgeschlagen, dass den beiden Befestigungsmechanismen das fließfähige Medium über einen gemeinsamen Medienanschluss zugeführt wird. So kann, wie oben erwähnt, die Durchführung eines Wechsels stark beschleunigt werden.

Es wird daher auch verfahrensseitig vorgeschlagen, dass eine Verbindung zwischen dem Betätigungsmechanismus und der Umformungsstation hergestellt wird, und anschließend, insbesondere durch Beaufschlagung mit dem gasförmigen Medium, ein Lösen der Blasform erreicht wird.

Bevorzugt wird der Träger hinsichtlich dessen Drehstellung gegenüber der Betätigungseinrichtung ausgerichtet.

Bei einem bevorzugten Verfahren ist es möglich, dass sich das Blasrad zunächst insbesondere mittels seines Hauptantriebes auf eine Startposition drehen kann, beispielsweise eine Position, an der die Blasform einer ersten Umformungsstation gewechselt werden kann.

Weiterhin fährt bevorzugt ein Aktor aus und stellt eine formschlüssige Verbindung her. Gleichzeitig wird durch dieses Herstellen das Blasrad genau positioniert. In einem weiteren Verfahrensschritt fährt ein Robotergreifer ein und stellt insbesondere eine formschlüssige Verbindung mit der Blasform her (so dass die Blasform bevorzugt (zumindest auch) von dem Roboter gehalten wird). Über die oben erwähnte formschlüssige Verbindung zwischen der Betätigungseinrichtung und der Umformungsstation kann Druckluft zum Entriegeln der Blasformen bzw. der Seitenteile und des Bodenteils zugeschaltet werden. In einem nächsten Schritt werden die Formträger geöffnet, was insbesondere durch ein Auseinanderschwenken derselben vorgenommen wird. Weiterhin kann die Bodenform nach unten gefahren werden. In diesem Zustand wird bevorzugt die Blasform nur noch durch die Robotereinrichtung gehalten. Es kann nunmehr der Formwechselvorgang gestartet werden, d.h. es wird eine Blasform entnommen und eine andere Blasform eingelegt. In einem weiteren Verfahrensschritt wird der Formträger geschlossen und/oder die Bodenform auch nach oben gefahren. Die Druckluftversorgung wird abgeschaltet, was dazu führt, dass - wie oben erwähnt - die einzelnen Befestigungsmechanismen jeweils verriegeln. Weiterhin wird auch die Bodenform nach oben gefahren. Schließlich fährt der Aktor wieder zurück, so dass nunmehr das Blasrad bevorzugt nicht mehr durch den Aktor an seiner Drehung gehindert wird. Der Hauptantrieb dreht nunmehr das Blasrad auf die nächste Position zum Auswechseln der nächsten Blasform.

Bei einem weiteren vorteilhaften Verfahren wird ein Öffnen der Blasform und/oder ein Entriegeln der Formträger während eines Stillstands der Umformungsstation vorgenommen. Vorteilhaft wird ein Öffnen der Blasform und/oder ein Entriegeln der Formträger vorgenmommen, nachdem das Blasrad positioniert wurde und bevorzugt auch, nachdem eine Verbindung zwischen der Umformungsstation und der Betätigungseinrichtung hergestellt wurde.

Bevorzugt wird dieses Öffnen der Blasform und/oder das Entriegeln der Formträger durch ein Stellglied und insbesondere ein Kurvensegment vorgenommen, welches Bestandteil der Betätigungseinrichtung ist. Bevorzugt wird zum Öffnen der Blasform und/oder zum Entriegeln der Formträger ein Stellglied und insbesondere ein Kurvensegment bewegt.

Vorteilhaft weist dieser Befestigungsmechanismus ein in einer vorgegebenen geraden Richtung verschiebbares Löseelement auf, und durch eine Verschiebung dieses Löseelements in eine erste vorgegebene Position wird die Befestigung des Bodenteils und/oder des Seitenteils an dem (jeweiligen) Träger gelöst und durch eine Verschiebung dieses Löseelements in eine zweite vorgegebene Position das Bodenteil und/oder das Seitenteil an dem (jeweiligen) Träger befestigt.

Vorteilhaft wird wenigstens ein Bodenteil und/oder wenigstens ein Seitenteil dieser Blasformeinrichtung von einem fließfähigen Temperiermedium durchströmt wird, wobei dieses Temperiermedium dem Bodenteil und/oder dem Seitenteil mittels einer Anschlusseinrichtung zugeführt wird.

Bevorzugt kann durch eine Entfernung des Bodenteils und/oder des Seitenteils von dem Träger auch die Anschlusseinrichtung getrennt werden und so besonders bevorzugt eine Verbindung zwischen dem Bodenteil bzw. dem Seitenteil und einer Temperiermediumversorgung getrennt werden. Weiterhin kann bevorzugt durch eine Zustellbewegung des Bodenteils bzw. des Seitenteils auf den Träger zu eine Temperiermediumversorgung hergestellt werden.

Bei einem weiteren vorteilhaften Verfahren wird dem Bodenteil das Temperiermedium mittels einer ersten Anschlusseinrichtung zugeführt und mittels einer zweiten Anschlusseinrichtung von dem Bodenteil abgeführt und bei einer Montage oder Demontage des Bodenteils von dem Träger werden Anschlusselemente der ersten Anschlusseinrichtung und Anschlusselemente der zweiten Anschlusseinrichtung zeitversetzt miteinander verbunden oder voneinander gelöst.

Weitere Vorteile und Ausführungsformen ergeben sich aus den beigefügten Zeichnungen:
Darin zeigen:
- Fig. 1: eine Darstellung einer Umformungseinrichtung;
- Fig. 2: eine Schnittdarstellung einer Umformungseinrichtung;
- Fig. 3: eine Detaildarstellung der in Fig. 2 gezeigten Umformungseinrichtung;
- Fig. 4: eine weitere Detaildarstellung der in Fig. 2 gezeigten Umformungseinrichtung; und
- Fig. 5: eine weitere Detaildarstellung der in Fig. 2 gezeigten Umformungseinrichtung;
- Fig. 6: eine Darstellung der Umformungseinrichtung mit einer gemeinsamen Medienanschlusseinrichtung;
- Fig. 7: eine Darstellung einer Umformungseinrichtung mit Betätigungseinrichtung;
- Fig. 8: eine Seitenansicht der in Fig. 7 gezeigten Vorrichtung;
- Fig. 9: eine Detailansicht der in Fig. 7 gezeigten Vorrichtung;
- Fig. 10: eine Darstellung der Betätigungseinrichtung mit Kurvensegmenten; und
- Fig. 11: die Darstellung der Betätigungseinrichtung aus Fig. 10 mit einer Umformungsstation.

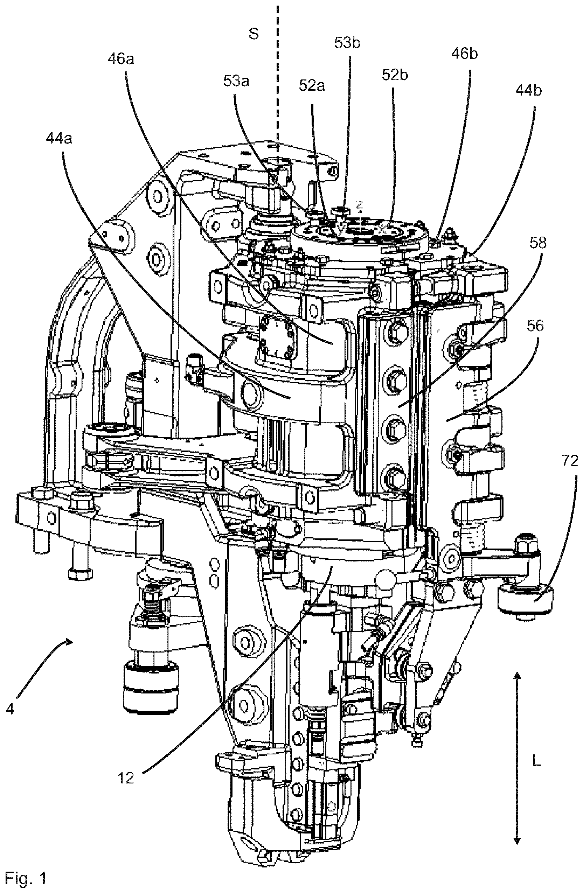

Figur 1 zeigt eine Umformungsstation 4 einer erfindungsgemäßen Umformungseinrichtung (nicht in der Gesamtheit dargestellt) in einem geschlossenen Zustand. Diese Umformungseinrichtung 1 weist dabei ein erstes Blasformträgerteil 44a sowie ein zweites Blasformträgerteil 44b auf. Diese beiden Teile können bezüglich einer hier vertikal verlaufenden Schwenkachse S auseinandergeklappt werden, um so einen Kunststoffvorformling in eine Blasform eingeben zu können. An diesen beiden Blasformträgerteilen 44a, 44b sind Blasformträgerschalen 46a und 46b angeordnet. Dabei können auch diese Blasformträgerschalen mittels eines (Schnell-) Befestigungsmechanismus befestigt sein. Dieser Schnellbefestigungsmechanismus kann dabei ebenfalls automatisch betätigbar sein.

An den Blasformträgerschalen 46a, 46b sind jeweils wiederum Blasformseitenteile 52a und 52b angeordnet. Die Bezugszeichen 53a und 53b kennzeichnen Vorsprünge bzw. Greifelemente, an denen die Blasformen von einem Wechselautomaten, wie einem Roboter gegriffen und angehoben werden können.

Die Bezugszeichen 56 und 58 beziehen sich auf zwei Verriegelungselemente, die zum Verriegeln der Blasform dienen. Dabei ist ein Verriegelungselement 58 an dem Blasformträgerteil 44a angeordnet und das andere Verriegelungselement, welches bezüglich einer vertikalen Achse schwenkbar ist, ist an dem Blasformträgerteil 44b angeordnet. Über eine Kurvenrolle 72 kann ein Öffnen und Schließen dieses Verriegelungsmechanismus erreicht werden.

Das Bezugszeichen 12 kennzeichnet einen Träger, an dem die Blasform angeordnet ist. Diese Träger kann- insbesondere in einem Arbeitsbetrieb der Vorrichtung - über einen Antrieb, wie beispielsweise einen motorischen oder auch einen hydraulischen oder pneumatischen Antrieb (insbesondere zum Schließen und Öffnen der Blasform) angehoben und abgesenkt werden.

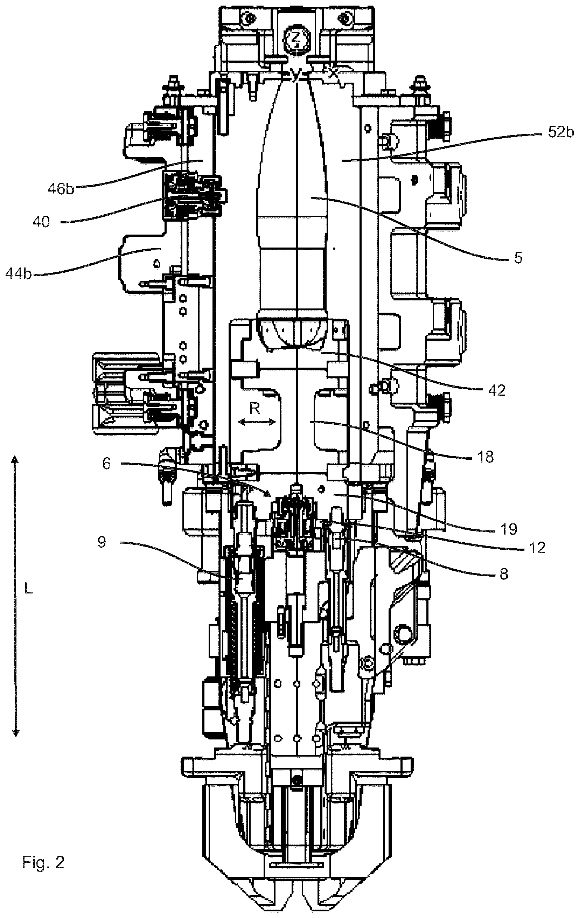

Figur 2 zeigt eine Schnittdarstellung der Umformungsstation 1. Man erkennt hier wieder das Blasformteil 52b, welches an einer Blasformträgerschale 46b sowie einem Blasformträger 44b angeordnet ist. Das Bezugszeichen 40 kennzeichnet den Befestigungsmechanismus, mittels dessen das Blasformträgerschalenteil an dem Blasformträgerteil 46b angeordnet ist.

In dem Hohlraum 5 kann ein Kunststoffvorformling durch Beaufschlagung mit Druckluft zu dem Kunststoffbehältnis expandiert werden. Zu diesem Zweck wird, wie oben erwähnt, an die Mündung des Kunststoffvorformlings Druckluft angelegt.

Das Bezugszeichen 42 kennzeichnet ein Bodenteil der Blasform, welches ebenfalls den Hohlraum 5 begrenzt. Dieses Bodenteil 42 ist an einem Zwischenträger 18 angeordnet, der auch für eine Anpassung an unterschiedliche Behältnisgattungen dient. Der Zwischenträger 18 wiederum ist an einem Befestigungsteil 19 befestigt und dieses wiederum über den erfindungsgemäßen Befestigungsmechanismus an dem Trägerteil 12.

Die Bezugszeichen 8 und 9 kennzeichnen schematisch Anschlusseinrichtungen, welche zur Zufuhr eines Kühlmediums dienen. Innerhalb des Befestigungsteils 19 verlaufen die entsprechenden Fluidkanäle (nicht gezeigt) zunächst radial nach innen, anschließend ebenfalls in vertikaler Richtung durch den Zwischenträger 18 und gelangen auf diese Weise in das Bodenteil 42, um dieses zu temperieren. Bevorzugt weist daher auch das Bodenteil 42 (nicht gezeigte) Temperiermediumkanäle auf

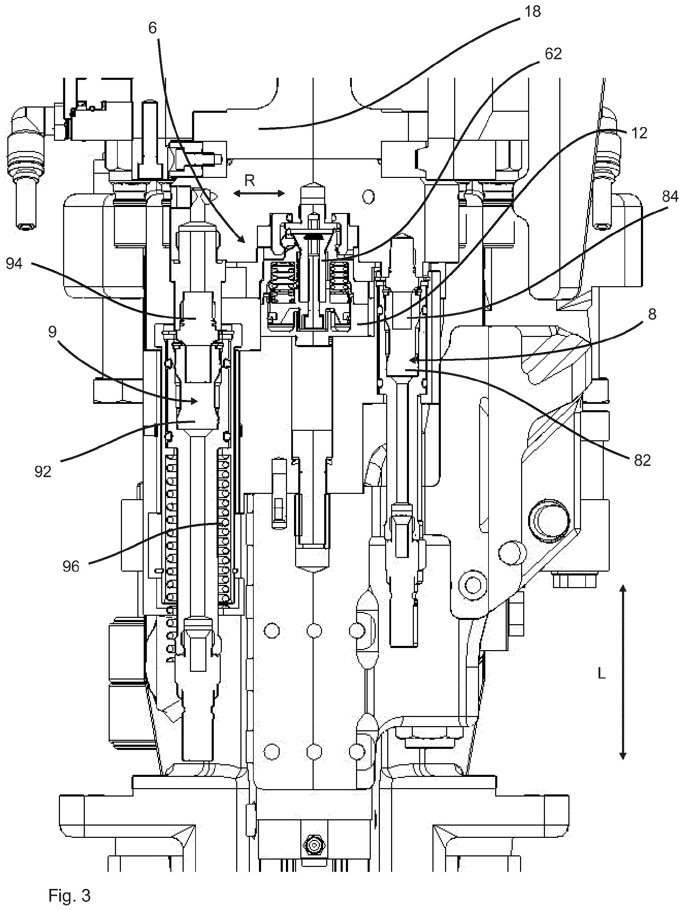

Figur 3 zeigt eine Detaildarstellung der in Fig. 2 gezeigten Vorrichtung. Dabei bezieht sich das Bezugszeichen 6 in seiner Gesamtheit auf den Befestigungsmechanismus. Dieser Befestigungsmechanismus weist hier ein Löseelement 62 auf, welches in vertikaler Richtung bzw. in der Längsrichtung L bewegbar ist. Auch das Abnehmen der Blasform erfolgt in dieser Richtung. Auch werden durch diese Bewegung in der gleichen Richtung die Anschlusseinrichtungen 8 bzw. deren Anschlusselemente 82 und 84 bzw. 92 und 94 voneinander getrennt. Das Löseelement bzw. Stellelement kann durch Beaufschlagung mit Druckluft angehoben werden, wie unten genauer erläutert, um die Arretierung zwischen dem Träger 12 und dem Befestigungsteil 19 und damit auch die Arretierung mit dem Bodenteil der Blasformeinrichtung zu lösen. Das Befestigungsteil 19 kann dabei als scheibenartiger Körper ausgeführt sein, der beispielsweise an dem Zwischenträger angeschraubt ist. Dieses Befestigungsteil wird bei einem Wechsel des Bodenteils 42 gemeinsam mit dem Bodenteil 42 und dem Zwischenträger 18 abgenommen. Das Bezugszeichen R kennzeichnet eine zu der Längsrichtung L senkrecht stehende Richtung. In dieser Richtung können beispielsweise die Seitenteile von ihren jeweiligen Trägern entnommen werden.

In Figur 3 bezieht sich das Bezugszeichen 96 auf ein Federelement, welches das Anschlusselement 92 nach oben vorspannt. Auf diese Weise kann ein zeitlich versetztes Lösen der beiden Anschlusseinrichtungen 8, 9 erreicht werden.

Der in den Fig. 3 - 5 genauer gezeigte Befestigungsmechanismus kann in entsprechend auch zur Befestigung der Seitenteile an deren Träger d.h. insbesondere der Blasformträgerschalen verwendet werden. In diesem Falle sind jedoch die jeweils gezeigten Befestigungsmechanismen 6 in einer Stellung angeordnet, die gegenüber der gezeigten Stellung im Wesentlichen um 90° gedreht ist.

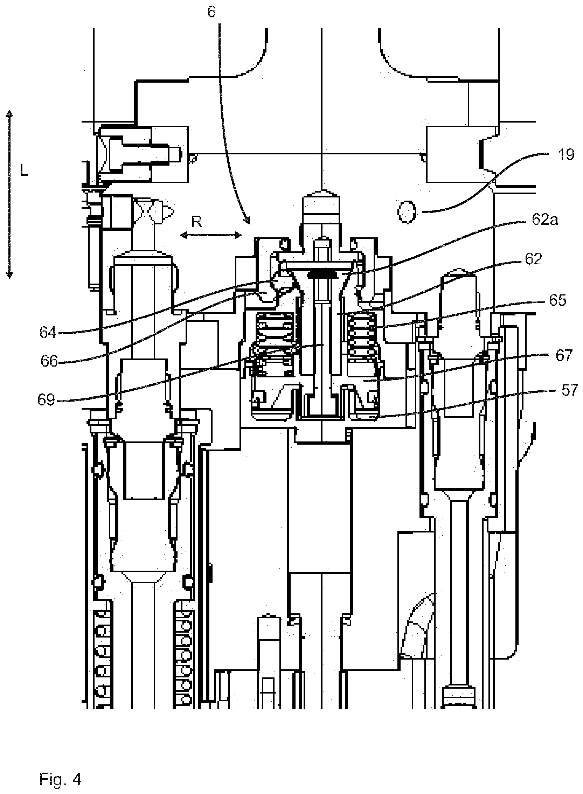

Figur 4 veranschaulicht genauer die Funktionsweise des Befestigungsmechanismus 6. Das Löseelement 62 wird im normalen Betriebszustand durch ein Federelement 65 nach unten gedrückt. Auf diese Weise wird durch die Schrägfläche 62a das Arretierelement 64 nach außen gedrückt und greift auf diese Weise in das Befestigungselement 66 ein. Durch diesen Eingriff kann eine Trennung zwischen dem Element 72 und dem Träger 12 verhindert werden. Falls nun der Aufnahmeraum 67 mit Druckluft beaufschlagt wird, wird sich das Stellelement 62 nach oben bewegen und auf diese Weise wird sich auch das Arretierelement 64 wieder zurückziehen und daher nicht mehr in Eingriff mit dem Befestigungselement 66 stehen. In dieser Position kann das Befestigungsteil 19 und damit auch das Bodenteil hier in der Richtung L nach oben abgehoben werden. Gleichzeitig werden hierdurch auch die Anschlusseinrichtungen getrennt, wenn auch zeitlich verzögert. Das Bezugszeichen 69 bezieht sich auf eine Führungseinrichtung, welche zum Führen des Löseelements 62 dient. Diese Führungseinrichtung 69 kann dabei in eine Bohrung des Löseelements 62 eingreifen, so dass das Löseelement 62 gegenüber der Führungseinrichtung 69 gleiten kann, dabei jedoch durch diese Führungseinrichtung 69 geführt wird. Damit ist das Arretierelement in der in Fig. 4 gezeigten Richtung R bewegbar.

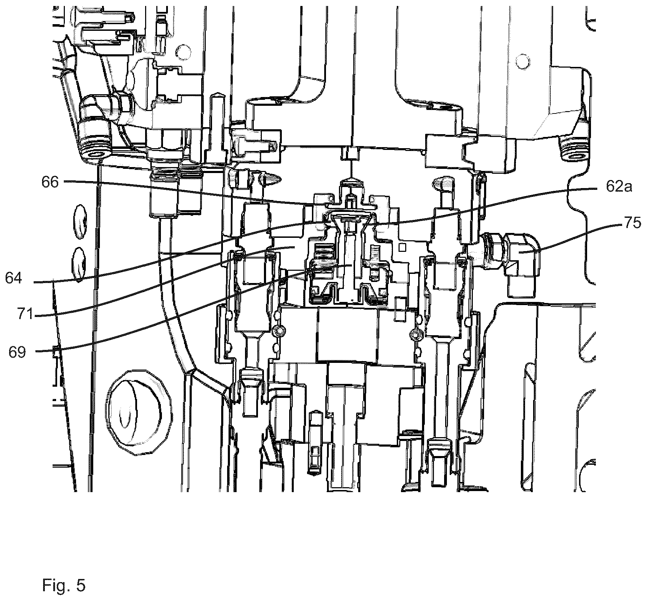

Figur 5 zeigt eine weitere Detaildarstellung des Befestigungsmechanismus. Man erkennt hier wiederum die Schrägfläche 62a, welche je nach Stellung des Stelleelementes bzw. Löseelements das Arretierelement 64 radial nach außen drückt. Das Bezugszeichen 75 kennzeichnet einen Anschluss zur Zuführung von Druckluft. Dieser Anschluss steht in Strömungsverbindung mit dem in Figur 4 gezeigten Aufnahmeraum 57, so dass durch Beaufschlagung mit Druckluft ein Lösen des Befestigungsmechanismus 6 erreicht werden kann. Durch das Federelement 65 wird jedoch erreicht, dass in einem Normalzustand das Bodenteil an dem Träger 12 arretiert ist.

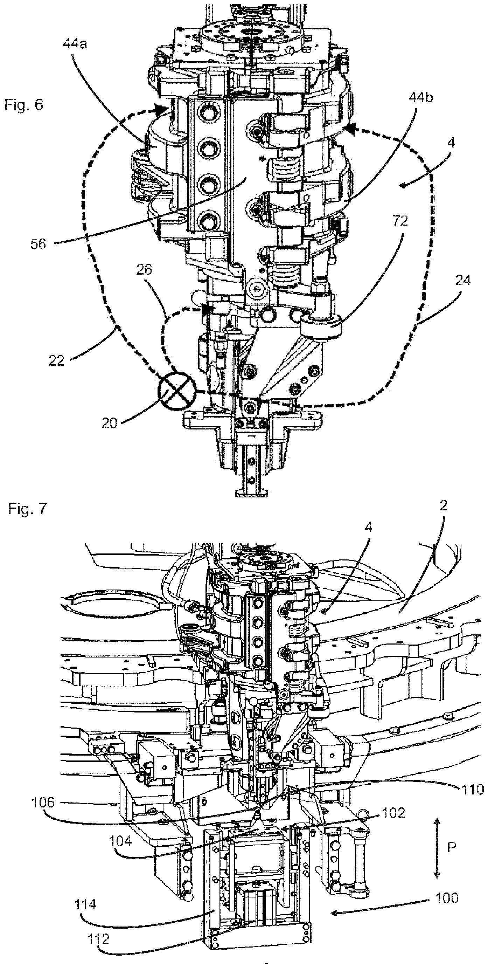

Figur 6 zeigt eine weitere Darstellung einer erfindungsgemäßen Vorrichtung. Bei dieser Darstellung ist neben der eigentlichen Umformungsstation 4 mit deren Seitenteilen bzw. den Formträgern 44a und 44b sowie der Verriegelungseinrichtung 56 auch eine zentrale Medienanschlusseinrichtung 20 schematisch dargestellt. Über diese zentrale Medienanschlusseinrichtung kann das fließfähige Medium, insbesondere Druckluft, den einzelnen Befestigungsmechanismen zugeführt werden (nur schematisch gezeigt). Zu diesem Zweck sind hier drei flexible Schläuche (bzw. flexible Zuführleitungen) 22, 24 und 26 vorgesehen, welche zur Leitung des fließfähigen Mediums dienen. Durch die Flexibilität dieser Schläuche wird erreicht, dass auch ein Öffnen und Schließen der Blasform bei weiterhin angeschlossenen Schläuchen möglich ist und gleichzeitig der Medienanschluss 20 stationär angeordnet sein kann. Das bedeutet, dass die Formträgerhälften und auch der Bodenträger sich gegenüber diesem Medienanschluss 20 bewegen.

Figur 7 zeigt eine weitere Ausführungsform einer erfindungsgemäßen Vorrichtung. In dieser Darstellung ist auch der drehbare Träger 2 dargestellt, an dem eine Vielzahl von Umformungsstationen 4 (hier nur eine gezeigt) angeordnet ist. Weiterhin ist hier auch die Betätigungseinrichtung 100 dargestellt, welche dazu dient, um bei einem Formenwechsel die einzelnen Befestigungsmechanismen zu lösen. Diese Betätigungseinrichtung 100 ist stationär angeordnet, d.h. der Träger 2 mit den Umformungsstationen 4 dreht sich gegenüber dieser Betätigungseinrichtung. Die Betätigungseinrichtung weist dabei einen (insbesondere stationären) Rahmen bzw. Träger 114 auf, an dem ein Antrieb 112 angeordnet ist. Das Bezugszeichen 1 bezieht sich auf die Vorrichtung in ihrer Gesamtheit.

Dieser Antrieb dient dazu, um das Aktorelement 102 in der Richtung des Doppelpfeils P, d.h. nach oben oder unten zu senken. Das Aktorelement 102 weist ein erstes Eingriffsmittel 104, bevorzugt in Form eines formschlüssigen Elements, auf, welches in ein zweites Eingriffsmittel 106, welches an der Umformungsstation angeordnet ist, eingreifen kann. Durch diesen Eingriff und insbesondere das Zusammenwirken von Schrägflächen, welche an den beiden Eingriffsmitteln 104 und 106 angeordnet sind, kann die Umformungsstation 4 gegenüber der Betätigungseinrichtung 100 positioniert werden. Das Bezugszeichen 110 kennzeichnet ein Kopplungselement, mit dem eine Strömungsverbindung herstellbar ist. Sobald diese Strömungsverbindung hergestellt ist, können die einzelnen Befestigungsmechanismen, wie in Figur 7 gezeigt, mit dem fließfähigen Medium und insbesondere mit der Druckluft versorgt werden.

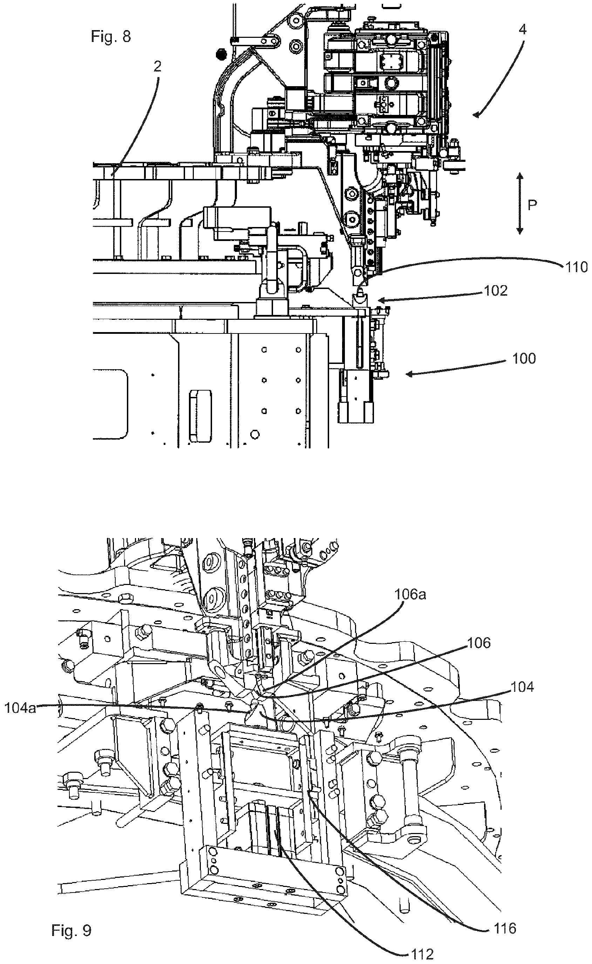

Figur 8 zeigt eine Seitenansicht der in Figur 7 gezeigten Vorrichtung. Auch hier ist wieder die Betätigungseinrichtung 100 vorgesehen sowie auch das Aktorelement 102, welches entlang des Doppelpfeils P nach oben und unten geschoben werden kann.

Figur 9 zeigt schließlich eine Detaildarstellung der Vorrichtung. Man erkennt hier insbesondere Einführschrägen 104a, welche mit entsprechenden Schrägen 106a zusammenwirken können, um so die genaue Positionierung der Umformungsstation 4 gegenüber der Betätigungseinrichtung 100 zu erreichen.

Das Bezugszeichen 116 kennzeichnet einen Schlitten, der gegenüber dem Träger 114 beweglich ist und der die Zustellung des Aktorelements 102 auf die Umformungsstation zu erlaubt.

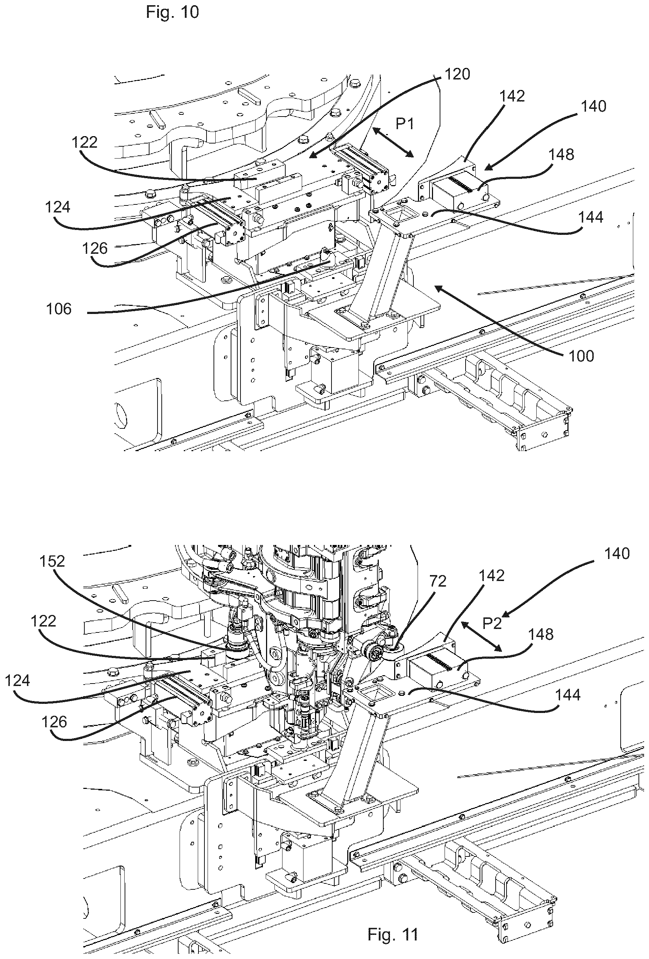

Fig. 10 zeigt eine weitere Darstellung der Betätigungseinrichtung 100. Man erkennt bei dieser Darstellung ein erstes Stellglied 120, welches hier ein Kurvensegment 122 aufweist. Dieses Kurvensegment ist auf einem Träger 124 befestigt. Dieser Träger 124 ist (mit dem Kurvensegment 122 in einer geraden Richtung entlang des Doppelpfeils P1 bewegbar. Das Bezugszeichen 126 bezieht sich auf eine Lagerungseinrichtung und Antriebseinrichtung zum verschieblichen Lagern des Kurvensegments 122. Mit Hilfe dieses Kurvensegments kann, nachdem die Betätigungseinrichtung in Verbindung mit der Umformungsstation steht, der Formträger geöffnet werden.

Das Bezugszeichen 140 bezieht sich auf ein zweites Stellglied, welches ebenfalls ein auf einem Träger 144 angeordnetes Kurvensegment 142 aufweist. Auch dieses Kurvensegment 142 ist entlang eines Doppelpfeils P2 beweglich und dient zum Entriegeln des Verriegelungsmechanismus der Umformungsstation. Das Bezugszeichen 148 kennzeichnet eine Antriebseinrichtung, um das Kurvensegment 142 zu bewegen.

Fig. 11 zeigt eine Darstellung der Betätigungseinrichtung 100, an der eine Umformungsstation angekoppelt ist. Im Rahmen dieser Ankopplung fährt eine Kurvenrolle 152 der Umformungsstation, die zum Öffnen und Schließen der Formträger dient, in das Kurvensegment 122 ein und kann von diesem (durch Betätigen der Antriebseinrichtung 126 bewegt werden. Auf diese Weise kann der Formträger geöffnet werden.

Ebenso fährt die Kurvenrolle 72 in das Kurvensegment 142 des zweiten Stellglieds 140 ein und so kann durch eine entsprechende Bewegung dieses Kurvensegments 142 die Verriegelung zwischen der Formträgern entriegelt werden.

Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- L: Längsrichtung
- R: von L abweichende Richtung
- 1: Vorrichtung
- 2: drehbarer Träger, Blasrad
- 4: Umformungsstation
- 5: Hohlraum
- 6: erster Befestigungsmechanismus
- 8: Anschlusseinrichtung
- 9: Anschlusseinrichtung
- 12: Trägerteil
- 18: Zwischenträger
- 19: Befestigungsteil
- 20: Medienanschlusseinrichtung
- 22, 24,26: flexible Leitung
- 40: zweiter Befestigungsmechanismus
- 42: Bodenteil
- 44a: erstes Blasformträgerteil
- 44b: zweites Blasformträgerteil
- 46a, 46b: Blasformträgerschale
- 52a,b: Blasformseitenteil
- 53a,b: Vorsprung bzw. Greifelement
- 56: Verriegelungselement
- 57: Aufnahmeraum
- 58: Verriegelungselement
- 62: Löseelement
- 62a: Schrägfläche
- 64: Arretierelement
- 65: Federelement
- 66: Befestigungselement
- 69: Führungseinrichtung
- 72: Kurvenrolle
- 75: Anschluss
- 82,84: Anschlusselement
- 92,94: Anschlusselement
- 96: Federelement
- 100: Beätigungseinrichtung
- 102: Aktorelement
- 104: Eingriffsmittel
- 104a: Schrägfläche
- 106: Eingriffsmittel
- 106a: Schrägfläche
- 110: Kopplungselement
- 114: Grundträger
- 116: Schlitten
- 120: erstes Stellglied
- 122: Kurvensegment
- 124: Träger des Kurvensegments 122
- 126: Führungs- und Antriebseinrichtung
- 140: zweites Stellglied
- 142: Kurvensegment
- 144: Träger des Kurvensegments 142
- 148: Antriebseinrichtung
- 152: Kurvenrolle
- P: Bewegungsrichtung
- P1, P2: Bewegungsrichtungen der Stellglieder

## Patentansprüche

1. Vorrichtung (1) zum Umformen von Kunststoffvorformlingen zu Kunststoffbehältnissen, mit wenigstens einer Umformungsstation (4), welche eine Blasform aufweist, innerhalb derer die Kunststoffvorformlinge durch Beaufschlagung mit einem gasförmigen Medium expandierbar sind, wobei die Blasform ein Bodenteil (42) aufweist, welches lösbar an einem Träger (12) angeordnet ist, und mit einem ersten Befestigungsmechanismus (6), um das Bodenteil (42) an dem Träger (12) zu befestigen, und wobei die Blasform wenigstens ein Seitenteil (52a, 52b), aufweist, welches lösbar an einem Träger (46a, 46b) angeordnet ist und mit einem zweiten Befestigungsmechanismus (40), um das Seitenteil (52a, 52b) an dem Träger (46a, 46b) zu befestigen, wobei der zweite Befestigungsmechanismus (40) mittels eines fließfähigen Mediums betätigbar ist, um das Seitenteil (52a, 52b) von dem Träger (46a, 46b) zu entriegeln, **dadurch gekennzeichnet, dass** der erste Befestigungsmechanismus (6) mittels eines fließfähigen Mediums betätigbar ist, um das Bodenteil (42) gegenüber dem Träger (12) zu entriegeln und und weiterhin eine Medienanschlusseinrichtung (20) vorgesehen ist, um das fließfähige Medium gleichzeitig mehreren Befestigungsmechanismen (6, 40) zuzuführen.

2. Vorrichtung (1) nach Anspruch 1,
**dadurch gekennzeichnet, dass**
wenigstens ein Befestigungsmechanismus (6, 40) derart gestaltet ist, dass er in einem bezüglich des fließfähigen Mediums drucklosen Zustand in einem verriegelten Zustand ist.

3. Vorrichtung nach wenigstens einem der vorangegangenen Ansprüche,
**dadurch gekennzeichnet, dass**
wenigstens ein Befestigungsmechanismus (6, 40) durch Beaufschlagung mit einem vorgegebenen Druck des fließfähigen Mediums von einem verriegelten Zustand in einen entriegelten Zustand bringbar ist, wobei dieser vorgegebene Druck bevorzugt größer ist als 2bar.

4. Vorrichtung nach wenigstens einem der vorangegangenen Ansprüche,
**dadurch gekennzeichnet, dass**
die Medienanschlusseinrichtung (20) mittels wenigstens einer bevorzugten flexiblen Zuführleitung (22, 24, 26) mit wenigstens einem Befestigungsmechanismus (6, 40) in Verbindung steht.

5. Vorrichtung nach wenigstens einem der vorangegangenen Ansprüche,
**dadurch gekennzeichnet, dass**
die Blasform wenigstens ein weiteres Seitenteil (52b, 52a), aufweist, welches lösbar an einem Träger (46b, 46a) angeordnet ist und mit einem zweiten Befestigungsmechanismus, um das Seitenteil (52b, 52a) an dem Träger (46b, 46a) zu befestigen.

6. Vorrichtung (1) nach wenigstens einem der vorangegangenen Ansprüche,
**dadurch gekennzeichnet, dass**
der Befestigungsmechanismus (6) eine Vorspanneinrichtung (65) aufweist, welche kraft- und/oder formschlüssig wenigstens ein Blasformteil (42, 52a, 52b) an dem diesem Blasformteil (42, 52a, 52b) zugeordneten Träger (12, 46a, 46b) fixiert.

7. Vorrichtung (1) nach Anspruch 6,
**dadurch gekennzeichnet, dass**
die Vorspanneinrichtung (65) von dem fließfähigen Medium beaufschlagbar ist.

8. Vorrichtung (1) nach wenigstens einem der vorangegangenen Ansprüche,
**dadurch gekennzeichnet, dass**
der Befestigungsmechanismus (6, 40) einen beweglichen Kolben aufweist, der über das fließfähige Medium in eine erste Position verschiebbar und/oder über die Vorspanneinrichtung in eine zweite Position verschiebbar ist.

9. Verfahren zum Betreiben einer Vorrichtung zum Umformen von Kunststoffvorformlingen zu Kunststoffbehältnissen, wobei in einem Arbeitsbetrieb die Kunststoffvorformlinge durch Beaufschlagung mit einem fließfähigen Medium innerhalb einer Blasformeinrichtung expandiert werden, wobei die Blasform ein Bodenteil (42) aufweist, welches lösbar an einem Träger (12) angeordnet ist, und wobei ein erster Befestigungsmechanismus (6) das Bodenteil (42) an dem Träger (12) zu befestigt, und wobei die Blasform wenigstens ein Seitenteil (52a, 52b), aufweist, welches lösbar an einem Träger (46a, 46b) angeordnet ist und wobei ein zweiter Befestigungsmechanismus (40), das Seitenteil (52a, 52b) an dem Träger (46a, 46b) befestigt, wobei der zweite Befestigungsmechanismus (40) mittels eines fließfähigen Mediums betätigt wird, um das Seitenteil (52a, 52b) von dem Träger (46a, 46b) zu entriegeln, **dadurch gekennzeichnet, dass** der erste Befestigungsmechanismus (6) mittels eines fließfähigen Mediums betätigt wird, um das Bodenteil gegenüber dem Träger zu entriegeln und weiterhin eine Medienanschlusseinrichtung vorgesehen ist, um das fließfähige Medium den Befestigungsmechanismen zuzuführen.

10. Verfahren nach Anspruch 9,
**dadurch gekennzeichnet, dass**
wenigstens ein Bodenteil (42) und/oder ein Seitenteil (52a, 52b) dieser Blasformeinrichtung von einem fließfähigen Temperiermedium durchströmt wird, wobei dieses Temperiermedium dem Bodenteil (42) und/oder dem Seitenteil (52a, 52b) mittels einer Anschlusseinrichtung zugeführt wird.

## Claims

1. System (1) for transforming plastic parisons into plastic containers with at least one transforming station (4) which has a blow mould within which the plastic parisons can be expanded by application of a gaseous medium, wherein the blow mould has a base part (42) which is disposed releasably on a support (12), and a first fastening mechanism (6) in order to fasten the base part (42) to the support (12), and wherein the blow mould has at least one side part (52a, 52b) which is disposed releasably on a support (46a, 46b) and a second fastening mechanism (40) in order to fasten the side part (52a, 52b) to the support (46a, 46b), wherein the second fastening mechanism (40) can be actuated by means of a flowable medium in order to unlatch the side part (52a, 52b) from the support (46a, 46b),
**characterized in that**
the first fastening mechanism (6) can be actuated by means of a flowable medium in order to unlatch the base part (42) from the support (12), and, furthermore, a media connection device (20) is provided in order to deliver the flowable medium simultaneously to a plurality of fastening mechanisms (6, 40).

2. System (1) according to claim 1,
**characterized in that**
at least one fastening mechanism (6, 40) is configured in such a way that it is in a latched state in a pressureless state with respect to the flowable medium.

3. System according to at least one of the preceding claims,
**characterized in that**
at least one fastening mechanism (6, 40) can be brought from a latched state into an unlatched state by the application of a predetermined pressure of the flowable medium, wherein this predetermined pressure is preferably greater than 2 bars.

4. System according to at least one of the preceding claims,
**characterized in that**
the media connection device (20) is connected by means of at least one preferred flexible supply line (22, 24, 26) to at least one fastening mechanism (6, 40).

5. System according to at least one of the preceding claims,
**characterized in that**
the blow mould has at least one further side part (52b, 52a) which is disposed releasably on a support (46b, 46a) and a second fastening mechanism in order to fasten the side part (52b, 52a) to the support (46b, 46a).

6. System (1) according to at least one of the preceding claims,
**characterized in that**
the fastening mechanism (6) has a pretensioning device (65) which fixes at least one blow mould part (42, 52a, 52b) by non-positive and/or positive engagement on the support (12, 46a, 46b) associated with this blow mould part (42, 52a, 52b).

7. System (1) according to claim 6,
**characterized in that**
the pretensioning device (65) can be acted upon by the flowable medium.

8. System (1) according to at least one of the preceding claims,
**characterized in that**
the fastening mechanism (6, 40) has a movable piston which is displaceable by means of the flowable medium into a first position and/or is displaceable by means of the pretensioning device into a second position.

9. Method for operating a system for transforming plastic parisons into plastic containers, wherein in a working operation the plastic parisons are expanded by application of a flowable medium within a blow moulding device, wherein the blow mould has a base part (42) which is releasably disposed on a support (12), and wherein a first fastening mechanism (6) fastens the base part (42) to the support (12), and wherein the blow mould has at least one side part (52a, 52b) which is releasably disposed on a support (46a, 46b) and wherein a second fastening mechanism (40) fastens the side part (52a, 52b) to the support (46a, 46b), wherein the second fastening mechanism (40) is actuated by means of a flowable medium in order to unlatch the side part (52a, 52b) from the support (46a, 46b),
**characterized in that**
the first fastening mechanism (6) is actuated by means of a flowable medium in order to unlatch the base part from the support and, furthermore, a media connection device is provided in order to deliver the flowable medium to the fastening mechanisms.

10. Method according to claim 9,
**characterized in that**
a flowable temperature control medium flows through at least one base part (42) and/or a side part (52a, 52b) of this blow moulding device, wherein this temperature control medium is delivered to the base part (42) and/or the side part (52a, 52b) by means of a connector.

## Revendications

1. Dispositif (1) servant à façonner des préformes en plastique en des récipients en plastique, avec au moins un poste de façonnage (4), lequel présente un moule de soufflage, à l'intérieur duquel les préformes en plastique peuvent être expansées par l'action d'un milieu sous forme gazeuse, dans lequel le moule de soufflage présente une partie de fond (42), laquelle est disposée de manière amovible au niveau d'un support (12), et avec un premier mécanisme de fixation (6) pour fixer la partie de fond (42) au niveau du support (12), et dans lequel le moule de soufflage présente au moins une partie latérale (52a, 52b), laquelle est disposée de manière amovible au niveau d'un support (46a, 46b), et avec un deuxième mécanisme de fixation (40) pour fixer la partie latérale (52a, 52b) au niveau du support (46a, 46b), dans lequel le deuxième mécanisme de fixation (40) peut être actionné au moyen d'un milieu pouvant s'écouler pour déverrouiller la partie latérale (52a, 52b) du support (46a, 46b),
**caractérisé en ce que**
le premier mécanisme de fixation (6) peut être actionné au moyen d'un milieu pouvant s'écouler pour déverrouiller la partie de fond (42) par rapport au support (12), et par ailleurs un dispositif de raccord pour milieu (20) est prévu pour amener le milieu pouvant s'écouler simultanément à plusieurs mécanismes de fixation (6, 40).

2. Dispositif (1) selon la revendication 1,
**caractérisé en ce que**
au moins un mécanisme de fixation (6, 40) est configuré de telle manière qu'il est dans un état verrouillé dans un état sans pression par rapport au milieu pouvant s'écouler.

3. Dispositif selon au moins l'une quelconque des revendications précédentes,
**caractérisé en ce que**
au moins un mécanisme de fixation (6, 40) peut être amené depuis un état verrouillé dans un état déverrouillé par l'action d'une pression spécifiée du milieu pouvant s'écouler, dans lequel ladite pression spécifiée est de préférence supérieure à 2 bar.

4. Dispositif selon au moins l'une quelconque des revendications précédentes,
**caractérisé en ce que**
le dispositif de raccord pour fluide (20) est relié à au moins un mécanisme de fixation (6, 40) au moyen d'au moins un conduit d'amenée (22, 24, 26) de préférence flexible.

5. Dispositif selon au moins l'une quelconque des revendications précédentes,
**caractérisé en ce que**
le moule de soufflage présente une autre partie latérale (52b, 52a), laquelle est disposée de manière amovible au niveau d'un support (46b, 46a) et avec un deuxième mécanisme de fixation pour fixer la partie latérale (52b, 52a) au niveau du support (46b, 46a).

6. Dispositif (1) selon au moins l'une quelconque des revendications précédentes,
**caractérisé en ce que**
le mécanisme de fixation (6) présente un dispositif de précontrainte (65), lequel bloque à force et/ou par complémentarité de forme au moins une partie de moule de soufflage (42, 52a, 52b) au niveau du support (12, 46a, 46b) associé à ladite partie de moule de soufflage (42, 52a, 52b).

7. Dispositif (1) selon la revendication 6,
**caractérisé en ce que**
le dispositif de précontrainte (65) peut être soumis à l'action du milieu pouvant s'écouler.

8. Dispositif (1) selon au moins l'une quelconque des revendications précédentes,
**caractérisé en ce que**
le mécanisme de fixation (6, 40) présente un piston mobile, qui peut être coulissé dans une première position par l'intermédiaire du milieu pouvant s'écouler et/ou peut être coulissé dans une deuxième position par l'intermédiaire du dispositif de précontrainte.

9. Procédé servant à faire fonctionner un dispositif servant à façonner des préformes en plastique en des récipients en plastique, dans lequel dans un mode de travail, les préformes en plastique sont expansées à l'intérieur d'un dispositif à moule de soufflage par l'action d'un milieu pouvant s'écouler, dans lequel le moule de soufflage présente une partie de fond (42), laquelle est disposée de manière amovible au niveau d'un support (12), et dans lequel un premier mécanisme de fixation (6) fixe la partie de fond (42) au niveau du support (12), et dans lequel le moule de soufflage présente au moins une partie latérale (52a, 52b), laquelle est disposée de manière amovible au niveau d'un support (46a, 46b), et dans lequel un deuxième mécanisme de fixation (40) fixe la partie latérale (52a, 52b) au niveau du support (46a, 46b), dans lequel le deuxième mécanisme de fixation (40) est actionné au moyen d'un milieu pouvant s'écouler pour déverrouiller la partie latérale (52a, 52b) du support (46a, 46b),
**caractérisé en ce que**
le premier mécanisme de fixation (6) est actionné au moyen d'un milieu pouvant s'écouler pour déverrouiller la partie de fond par rapport au support, par ailleurs un dispositif de raccord pour milieu est prévu pour amener le milieu pouvant s'écouler aux mécanismes de fixation.

10. Procédé selon la revendication 9,
**caractérisé en ce que**
au moins une partie de fond (42) et/ou une partie latérale (52a, 52b) dudit dispositif à moule de soufflage est traversée par un milieu de thermorégulation pouvant s'écouler, dans lequel ledit milieu de thermorégulation est amené à la partie de fond (42) et/ou à la partie latérale (52a, 52b) au moyen d'un dispositif de raccord.
